# EUROPÄISCHE PATENTSCHRIFT

(11) **EP 1 864 070 B1**
(45) Veröffentlichungstag und Bekanntmachung des Hinweises auf die Patenterteilung: **09.03.2011**
(21) Anmeldenummer: 06722453.5
(22) Anmeldetag: 09.01.2006
(51) Int. Cl.: F28D 20/00

(54) **MEHRKAMMERWÄRMESPEICHER ZUR SPEICHERUNG VON WÄRMEENERGIE UND FÜR DIE ERZEUGUNG ELEKTRISCHER ENERGIE**
MULTI-CHAMBER HEAT ACCUMULATOR WHICH IS USED TO STORE THERMAL ENERGY AND TO PRODUCE ELECTRIC ENERGY
ACCUMULATEUR THERMIQUE A PLUSIEURS CHAMBRES DESTINE A L'ACCUMULATION D'ENERGIE THERMIQUE ET A LA GENERATION D'ENERGIE ELECTRIQUE

(30) Priorität: 11.01.2005 DE 102005001347
(43) Veröffentlichungstag der Anmeldung: 12.12.2007
(73) Patentinhaber: Mohr, Peter, 81825 München (DE)
(72) Erfinder: MOHR, Peter, 81825 München (DE)
(74) Vertreter: Metten, Karl-Heinz
(86) Internationale Anmeldenummer: PCT/DE2006/000018
(87) Internationale Veröffentlichungsnummer: WO 2006/074637

(56) Entgegenhaltungen:
- EP-A- 1 431 695
- EP-A- 1 439 362
- US-A- 4 265 224
- US-A1- 2003 000 680

## Beschreibung

Die vorliegende Erfindung betrifft einen Mehrkammerwärmespeicher zur Speicherung von Wärmeenergie sowie für die Erzeugung elektrischer Energie. Die Erfindung betrifft ferner ein Verfahren zur Erzeugung elektrischer Energie mit Hilfe des erfindungsgemäßen Mehrkammerwärmespeichers.

Die Energieversorgung durch regenerierbare Energien unterliegt starken zeitlichen Schwankungen. Während Solarenergie von tages- und jahreszeitlichen Schwankungen abhängt, ist die Windenergie der allgemeinen Wetterlage und der Jahreszeit unterworfen. Auch ist der Energiebedarf zu unterschiedlichen Tages- und Jahreszeiten unterschiedlich stark ausgeprägt. Da zudem Energieangebot und -bedarf regelmäßig nicht parallel laufen, sucht man nach geeigneten Energiespeichern, um Schwankungen auszugleichen und Lastspitzen der Energieerzeugung zu mindern. Während bei der Wärmespeicherung bereits auf zumindest ansatzweise entwickelte Konzepte, wie den Kies-Wasser-Speicher, den Heißwasserspeicher, den Aquifer-und den Erdsondenspeicher zurückgegriffen werden kann, gestaltet sich die Speicherung elektrischer Energie noch stets besonders schwierig.

Geeignete Warmwasserwärmespeicher werden z.B. in der DE-OS 24 39 028 beschrieben. Bei diesen Wärmespeichern sollen sich Wärmeverluste gegenüber herkömmlichen Großwärmespeichern dadurch vermeiden lassen, daß man den Speichersee durch die Errichtung von Dämmen oder Sperrwänden in mehrere Zellen aufteilt, so daß die Zellen nacheinander bei der Ladung mit heißem, bei der Entladung mit kaltem Wasser, jeweils durch Verdrängung des einen durch das andere, befüllbar sind.

Gemäß der DE 42 06 695 A1 können für einen überirdisch angebrachten Jahreszeitenwärmeenergiespeicher als Warmespeichermedium Kies bzw. eine Mischung aus Erde und Kies und als Wärmetransportmedium Luft eingesetzt werden. Hierbei wird das Wärmespeichermedium durch eine aus Erde und Stroh bestehende Schicht thermisch isoliert.

Der DE 43 41 858 A1 ist ein unterirdischer Wärmespeicher aus Erdreich mit einer wärmeisolierenden Hülle aus mit Dichttoff versehener Lockergestein zu entnehmen. Über eine sich durch den oberen Hüllenabschnitt der Abdeckung erstreckende Energietransportvorrichtung wird dem Erdkörper Energie entnommen bzw. zugeführt. Als Energieübertragungsmittel wird Wasser eingesetzt, das dem wärmeisolielierten Erdkörper zentral zugeführt und auch wieder entnommen wird.

Die aus dem Stand der Technik bekannten Wärmespeicher eignen sich zur Befriedigung eines angebotsunabhängigen Wärmebedarfs, beispielsweise für die Trinkwassererwärmung oder die Raumheizung. Auch der in der DE 103 01 807 A1 beschriebene Mehrkammerwärmespeicher geht insoweit nicht über diese bekannten Wärmespeicherkonzepte hinaus.

Aus der EP 1 439 362 A2 ist ein Mehrkammerwärmespeicher zur Speicherung von Wärmeenergie bekannt, umfassend eine, insbesondere in den Boden eingelassene, Grubenstruktur, umfassend eine Sohle, eine umlaufende Seitenwand und eine Abdeckung, wobei die Grubenstruktur zumindest teilweise eine Feststoffgrubenfüllung enthält, wobei die Grubenfüllung durch mindestens zwei Trennwände und/oder mindestens eine umlaufende Trennwand in Zonen unterteilt ist, und dass die Sohle mindestens eine thermische Dämmschicht und mindestens eine, insbesondere oberhalb der Dämmschicht angebrachte, Abdichtschicht, insbesondere eine im wesentlichen wasserdichte, flexible Kunststoffdichtungsfolie, umfasst und dass die umlaufende Seitenwand mindestens eine thermische Dämmschicht und/oder mindestens eine, insbesondere innenliegende, Abdichtschicht umfasst, und dass die Abdeckung der Grubenstruktur mindestens eine thermische Dämmschicht und mindestens eine oberhalb der Dämmschicht vorliegende Abdichtschicht umfasst. Mit dem Mehrkammerwärmespeicher gemäß der EP 1 439 362 A2 soll es möglich seien, sich auf einfache Weise an individuelle Gegebenheiten in Bezug auf Energieangebot und Energienachfrage einzustellen. Dieser Mehrkammerwärmespeicher soll zudem auf einfache und kostengünstige Weise zugänglich sein. Des weiteren soll sich dieser Wärmespeicher nicht durch die für derartige Speicher üblicherweise in Kauf zu nehmende Trägheit bei der Energieeinspeisung bzw. -entladung kennzeichnen.

Die US 2003/000680 A1 beschreibt einen Mehrkammerwärmespeicher mit dem Merkmalen des Oberbegriffes des Patentanspruchs 1 umfassend eine Vielzahl konzentrisch umeinander angeordneter Bereiche, enthaltend ein Energiespeichermaterial sowie ein Vielzahl an Leitungen innerhalb dieser individuellen Bereiche, welche an von Verbrauchern geforderte Temperaturniveaus anschließbar sind. Der innerste Bereich ist mit einer elektrischen Heizvorrichtung ausgestattet sowie mit einem Leitungsgewinde. Dieser innere Bereich soll geeignet sein, Temperaturen zwischen 100°C und 500°C zu speichern. Zumindest eine der aus dem inneren Bereich hinausgehenden Leitungen soll dafür vorgesehen sein, einen elektrische Generator anzutreiben. Mit dem Mehrkammerwärmespeicher gemäß der US 2003/000680 A1 soll gespeicherten Wärmeenergie nahezu vollständig wieder an den Verbraucher abgegeben werden können.

Es wäre daher wünschenswert, auf Warmespeicher zurückgreifen zu können, die neben ihrer Nutzung als z.B. herkömmliche Warmwasserspeicher auch zur Gewinnung von elektrischer Energie eingesetzt werden können.

Der vorliegenden Erfindung lag daher die Aufgabe zugrunde, Warmespeicher verfügbar zu machen, mit denen sich nicht nur thermische Energie speichern und bei Bedarf abgreifen läßt, sondern mit deren Hilfe ebenfalls elektrische Energie bei Bedarf erzeugt werden kann.

Die der Erfindung zugrunde liegende Aufgabe wird gelöst durch einen Mehrkammerwärmespeicher, umfassend eine, insbesondere in den Boden eingelassene, Grubenstruktur, eine Sohle, eine, insbesondere umlaufende, Seitenwand und eine Abdeckung, wobei die Grubenstruktur mindestens eine innere Zone mit einer ersten Feststoffgrubenfüllung und mindestens eine äußere Zone mit einer zweiten Festststoffgrubenfüllung umfaßt, und die äußere Zone die innere Zone zumindest partiell umgibt, wobei die Grubenfüllung der inneren Zone von der Grubenfüllung der äußeren Zone riert ist, und wobei die innere Zone mindestens ein erstes Rohrleitungssystem mit mindestens einem Einlaß in die innere Zone und mindestens einem Auslaß aus der inneren Zone zur Durchleitung von Fluiden umfaßt, das zumindest abschnittsweise in dem Material der ersten Grubenfüllung der inneren Zone vorliegt.

Das für die Grubenfüllung von innerer und äußerer Zone vorgesehene Material füllt im allgemeinen die Grubenstruktur vollständig aus, so daß die Abdeckung mit ihrer Unterseite auf der Grubenfüllung zur Auflage kommt. Es ist demgemäß regelmäßig nicht erforderlich, daß z.B. die Trenn- und/oder Seitenwände tragende Funktionen übernehmen müssen oder daß separate Stützstreben vorzusehen sind, die die Abdeckung stützen oder tragen. Zumindest die Grubenfüllung der äußeren Zone, auch als zweite Grubenfüllung bezeichnet, ist üblicherweise derart ausgestaltet, daß ein Wärmeübertragungsmedium, z.B. Wasser, ohne weiteres hindurchfließen und auf seinem Weg zu einem Abfluß Wärme an das Material der Grubenfüllung abgeben oder von diesem aufnehmen kann. Selbst in einer die äußere Zone der zweiten Grubenkonstruktion vollständig ausfüllenden Grubenfüllung verbleibt vorzugsweise ein Hohlraumvolumen von etwa 15 bis 30 %.

In einer vorteilhaften Ausgestaltung ist vorgesehen, daß die äußere Zone im wesentlichen inkompressibles körniges und/oder splittartiges Material als zweite Feststoffgrubenfüllung, insbesondere mit einer 8-11 mm- ,11/16 mm- und/oder 11/22 mm-Körnung, umfaßt.

Die innere Zone umfaßt regelmäßig im wesentlichen Material als Feststoffgrubenfüllung, auch erste Feststoffgrubenfüllung oder erste Grubenfüllung genannt, das im Durchschnitt über eine geringere Körnung als die äußere Zone verfügt, insbesondere Sand, oder das zumindest bereichsweise eine kompakte Struktur aufweist. Im allgemeinen hat es sich als ausreichend erwiesen, wenn als zweites Grubenmaterial für die äußere Zone auf grobkörnigen Kies, gebrochenen Bauschutt, z.B. aus Beton oder Ziegeln, Schlacken hoher Dichte, z.B. Elektroofenschlacken, oder ansonsten nicht verwertbares Überlagerungsgestein aus Steinbrüchen oder aus beliebigen Mischungen der vorgenannten Materialien zurückgegriffen wird.

Das Grubenmaterial der inneren Zone umfaßt vorzugsweise inkompressibles körniges und/oder splittartiges Material mit einer 0/2 mm-, 2/5 mm- und/oder 5/8 mm-Körnung. Umfaßt sind folglich auch 0/8 mm- sowie 2/8 mm-Mischungen. Sand bzw. Splitt (> 0/2 mm) mit dem vorangehend genannten Körnungsmaß ist dem Fachmann hinlänglich bekannt. Des weiteren kann die innere Zone alternativ oder zusätzlich zumindest teilweise auch mit Staubmaterialien gefüllt sein. Besonders bevorzugt wird als Material für die Grubenfüllung der inneren Zone auf Kupferhüttenschlacke und/oder Elektroofenschlacke, vorzugsweise mit einer 0/2 mm-, 2/5 mm- und/oder 5/8 mm-Körnung, zurückgegriffen.

Selbstverständlich kann die erste Grubenfüllung der inneren Zone zumindest in Teilen auch Material mit z.B. einer 8/11 mm-Körnung aufweisen. Darüber hinaus ist es möglich, daß das Grubenmaterial der inneren Zone zumindest bereichsweise eine kompakte Struktur aufweist und z.B. gepreßt, gesintert oder in Form eines oder mehrerer monolithischer Blöcke vorliegt. Grundsätzlich kommt für das Grubenmaterial der inneren Zone jedes Material mit einer hohen Wärmespeicherkapazität, insbesondere für Temperaturen im Bereich von 120 bis 250°C, in Betracht. Es ist besonders zweckmäßig, darauf zu achten, daß die erste und/oder zweite Rohrleitungssystem in möglichst direktem Kontakt mit dem Grubenfüllmaterial steht, so daß ein ungehinderter und möglichst effektiver Wärmeübergang erfolgen kann. Vorzugsweise liegt das Grubenmaterial der inneren Zone vollflächig und kompakt an den Wandungen des ersten bzw. zweiten Rohrleitungssystems an. Je feiner das Grubenmaterial ist, um so besser gelingt in der Regel der gewünschte Wärmeübergang.

Für die Trennwand zwischen der inneren und äußeren Zone kann z.B. auf eine Wand aus Stein, Beton, Metall und/oder Kunststoff, insbesondere einem druckfesten Kunststoff und/oder eine Kunststoffolie, zurückgegriffen werden. In einer vorteilhaften Ausgestaltung ist diese Trennwand fluiddicht ausgeführt und gegebenenfalls auch mit der Sohle und/oder der Abdichtschicht fluiddicht verbunden. Bevorzugterweise zeichnet sich der erfindungsgemäße Mehrkammerwärmespeicher demnach dadurch aus, daß mindestens eine Trennwand die innere und äußere Zone fluiddicht und/oder thermisch isoliert gegeneinander abschirmt.

Bevorzugt wird für die Trennwand zwischen der inneren und der äußeren Zonen auf Steine, insbesondere Basaltsteine, Beton und/oder Metall zurückgegriffen. Zweck thermischer Isolierung kann diese Trennwand ferner eine Dämmschicht, beispielsweise umfassend Glaswolle, aufweisen. Aufgrund der für die innere Zone vorgesehenen hohen Speichertemperatur, die durchaus im Bereich von 120 bis 250°C liegen kann und vorzugsweise auf einen Temperaturbereich von 150 bis 180°C eingestellt wird, greift man für das Material der Trennwand zwischen innerer und äußerer Zone regelmäßig nicht auf Kuutstoffmaterialien zurück. Hingegen werden für diese Trennwand bevorzugt mineralische Stoffe eingesetzt.

Im allgemeinen reicht es aus, wenn die äußere Zone die innere Zone nur partiell umgibt bzw. umschließt. Beispielsweise kann die äußere Zone die innere Zone seitlich voll umfänglich umschließen, ohne jedoch auch die Unter- und/oder Oberseite der inneren Zone abzudecken. Ferner ist es gleichfalls möglich, daß die äußere Zone die Seiten bzw. die Seitenwände oder - flächen der inneren Zone nur partiell umgibt.

In einer weiteren Ausführungsform umschließt die äußere Zone nicht nur die Seiten der inneren Zone zumindest partiell, sondern ebenfalls deren Ober- und/oder Unterseite, vorzugsweise im wesentlichen vollständig. Dabei kann vorgesehen sein, daß die äußere Zone zumindest bereichsweise seitlich, jeweils zumindest bereichsweise seitlich und unterhalb, jeweils zumindest bereichsweise seitlich und oberhalb oder jeweils zumindest bereichsweise seitlich, unter- und oberhalb der inneren Zone vorliegt, insbesondere diese innere Zone allseitig umgibt. In diesem Fall hat es sich als vorteilhaft erwiesen, die Oberseite der inneren Zone und/oder die Unterseite der inneren Zone durch eine, insbesondere im wesentlichen horizontale Trennwand von der äußeren Zone bzw. dem Füllmaterial der äußeren Zone fluiddicht und vorzugsweise auch thermisch zu trennen. Mit der vorangehend genannten bevorzugten Ausführungsform gelingt es besonders gut, Wärmeverluste der inneren Zone zu minimieren bzw. diese Wärmeverluste unmittelbar der äußeren Zone zugute kommen zu lassen. Selbstverständlich ist es ebenfalls möglich, die innere Zone durch Anbringung weiterer Trennwände selber wiederum zu segmentieren.

Des weiteren ist erfindungsgemäß auch vorgesehen, die Grubenfüllung der äußeren Zone durch mindestens zwei Trennwände und/oder mindestens eine umlaufende Trennwand in mindestens zwei oder mehrere Teilzonen zu unterteilen.

Diese die Grubenfüllung unterteilenden Trennwände können z.B. nebeneinander angeordnet sein, insbesondere im wesentlichen parallel, sich kreuzen und/oder umlaufend, insbesondere kreisförmig umlaufen, angebracht sein. Indem man Trennwände zwischen der inneren und der äußeren Zone und gegebenenfalls auch innerhalb der äußeren Zone vorsieht, erhält man einen segmentierten Wärmespeicher mit vorzugsweise gegenseitig wärmegedämmten Speicherzellen, wodurch sich der Entropieverlust durch gezielte Einspeisung und Entnahme von Wasser bei den unterschiedlichen Temperaturen der Speichersegmente minimieren läßt.

Der erfindungsgemäße Mehrkammerwärmespeicher ist vorzugsweise in der Weise ausgeführt, daß ein Temperaturprofil ermöglicht wird, gemäß dem die innere Zone eine höhere Temperatur als die äußere Zone aufweist und, falls die äußere Zone selber wieder segmentiert ist, die Temperaturen der jeweiligen Speicherzonen von innen nach außen abfallen. Der erfindungsgemäße Wärmespeicher besitzt vorzugsweise weitgehend isotherme Temperaturzonen. Zudem ist es bautechnisch ohne weitere möglich, unterschiedlich wärmeleitfähige Wärmedämmungen für die Trennwände, beispielsweise mittels Materialvariationen und/oder durch unterschiedliche Dämmstoffdicken, insbesondere auch an unterschiedlichen Ortsbereichen oder Tiefen der Grubenfüllung vorzusehen. Auf diese Weise kann auch tiefenabhängigen Druckbelastungsanforderungen ohne weiteres Rechnung getragen werden. Der erfindungsgemäße Wärmespeicher kann getrennte Zonen mit Speichervolumina von wenigen 100 bis zu mehreren 1000 Kubikmetern an Grubenfüllung aufweisen. Selbstverständlich ist es auch möglich einzelne oder sämtliche Speicherzonen flüssigkeitsleer zu betreiben, was die Wärmeleitung zu den umgebenden Zonen reduzieren hilft und in einer gesteigerten Langzeitspeicherfähigkeit resultiert. Beispielsweise ist es möglich, die äußere Zone, insbesondere bei großvolumigen Speichern, z.B. mit einer äußeren Zone von 10000 m3 oder mehr, in etwa bis zu 30 Teilzonen, beispielsweise 3 bis 20 Teilzonen, zu unterteilen, die vorzugsweise separat bewirtschaftet werden können. In einer weiteren Ausführungsform kann ein erfindungsgemäßer Wärmespeicher auch über eine äußere Zone verfügen, die eine äußere Randteilzone, eine innenliegende Teilzone, an die sich die innere Zone anschließt, und eine zumindest bereichsweise dazwischenliegende Teilzone umfaßt. Im allgemeinen hat es sich als vorteilhaft erwiesen, die äußere Randteilzone im Entnahmezustand bei Temperaturen im Bereich von 55 bis 75°C, die innenliegende Teilzone im Entnahmezustand bei einer Temperatur im Bereich von etwa 90 bis 100°C und die mittlere, zwischen Randteilzone und innerer Teilzone liegende Teilzone im Entnahmezustand bei einer Temperatur im Bereich von 75 bis 90°C zu betreiben. Auch hat es sich vielfach als vorteilhaft erwiesen, das vorangehende Temperaturprofil bei äußeren Zonen, die über mehr als drei Teilzonen verfügen, anzuwenden. Besteht beispielsweise eine äußere Zone über insgesamt zehn Teilzonen, die vorzugsweise von außen nach innen angeordnet sind, können die beiden äußeren bei einer einheitlichen Temperatur betrieben werden, z.B. im Bereich von 55 bis 75°C, die sich anschließenden sechs mittleren Teilzonen können sodann bei einer Temperatur im Bereich von 75 bis 90°C und die innersten zwei Teilzonen der äußeren Zone bei einer Temperatur im Bereich von etwa 90 bis 100°C betrieben werden. Bei der Entnahme von thermischer Energie aus den Teilzonen hat es sich als vorteilhaft herausgestellt, die Temperatur der Teilzone nicht wesentlich unter 40°C sinken zu lassen.

Während in die äußere Zone zur Wärmeübertragung unmittelbar Fluid eingetragen wird, findet die Erwärmung der inneren Zone über die Durchleitung von Fluid durch ein in dem Grubenmaterial der inneren Zone eingebettetes erstes Rohrleitungssystem statt. Auf diese Weise ist es möglich, die innere Zone auf Temperaturen im Bereich von und auch oberhalb von 100° C aufzuheizen. Hierfür kann beispielsweise Abwärme aus industriellen Fertigungsprozessen eingesetzt werden. Auch kommen die thermische Energie aus Biomasseheizkraftwerken oder aus geothermischen Energiequellen oder der erhitzte Abgasstrom aus Verbrennungsprozessen oder aus Schmelzöfen zur Aufheizung der inneren Zone über das erste Rohrleitungssystem in Betracht. Ferner liefern auch Luftverflüssigungsanlagen Wärmemengen mit Temperaturen von weit über 100°C und können demgemäß für die Erhitzung des Grubenfüllmaterials der inneren Zone herangezogen werden. Das erste Rohrleitungssystem ist demgemäß vorzugsweise in der Weise auszuführen, daß es Drücken im Bereich bis 30 bar und Temperaturen bis 250°C ohne weiteres im Dauereinsatz Stand hält. Sofern es sich bei dem in dem ersten Rohrleitungssystem eingesetzten Fluid um hochreines Wasser, z.B. Kondenswasser, handelt, das zudem nicht in Kontakt mit der Atmosphäre treten kann, reichen üblicherweise Stahlrohre für das erste Rohrleitungssystem aus.

Ein durch die innere Zone geführtes zweites Rohrleitungssystem kann z.B. dafür vorgesehen sein, insbesondere bereits vorgewärmtes, Wasser, beispielsweise entnommen aus der äußeren Zone des Wärmespeichers, mittels Durchleitung durch die innere Zone auf eine erhöhte Temperatur zu bringen, um sodann z.B. zur Gewinnung elektrischer Energie eingesetzt zu werden. Zu diesem Zweck kann selbstverständlich auch auf das erste Rohrleitungssystem zurückgegriffen werden. Das zweite Rohrleitungssystem hat in der Regel nicht Drücken im Bereich von 25 bis 30 bar Stand zu halten. Vielmehr hat es sich als geeignet erwiesen, das in der inneren Zone zu erwärmende Wasser mit einem Druck von z.B. nicht mehr als 15 bar, geeigneterweise von etwa 10 bar durch das zweite Rohrleitungssystem zu leiten. Sofern als Fluid für das zweite Rohrleitungssystem nicht auf hochreines Wasser zurückgegriffen wird, sondern hierfür beispielsweise das der äußeren Zone des Wärmespeichers entnommene Wasser zum Einsatz kommt, hat es sich als vorteilhaft erwiesen, die Rohre des zweiten Rohrleitungssystems in Edelstahl oder Kupfer auszuführen. Demgemäß kann die innere Zone über mindestens ein zweites Rohrleitungssystem verfügen mit mindestens einem Einlaß in die innere Zone und mindestens einem Auslaß aus der inneren Zone zur Durchleitung von Fluiden, das zumindest abschnittsweise in dem Material der ersten Grubenfüllung der inneren Zone vorliegt.

Vorzugsweise liegt gekoppelt an den Auslaß von erstem und/oder zweitem Rohrleitungssystem mindestens eine Anlage zur Durchführung des Kalina-Prozesses, eine erste Anlage zur Durchführung eines geschlossenen Gasturbinenprozesses, bei dem Inertgase, beispielsweise Stickstoff, Kohlendioxid oder Edelgase, verdichtet und in einem Gaserhitzer erhitzt und anschließend in einer Gasturbine entspannt werden, und/oder eine Anlage zur Durchführung des ORC-Prozesses vor. Diese Verfahren beruhen auf geschlossenen Kreislaufsystemen, bei denen Verdichter, Gasturbinen, Verdampfer, Kondensatoren und Regeneratoren zum Einsatz kommen können.

Bei dem ORC-Prozeß (Organic Rankine Cycle) wird eine leicht flüchtige organische Verbindung in einem Verdampfer verdampft und als gasförmiges Arbeitsfluid in einer Turbine expandiert, wobei das erschöpfte gasförmige Arbeitsfluid anschließend in einem Kondensator auskondensiert wird, um sodann wiederverwendet werden zu können.

Bei dem grundlegenden Kalina-Prozeß wird zunächst bei einer relativ niedrigen Temperatur verfügbare Wärme verwendet, um eine teilweise Destillation von mindestens einem Teil eines Multikomponenten-Fluidstroms bei einem Zwischendruck auszuführen, um auf diese Weise Arbeitsfluidfraktionen mit unterschiedlichen Zusammensetzungen zu erhalten. Eine dieser Fraktionen ist hinsichtlich der niedriger siedenden Komponente relativ stärker angereichert, wohingegen eine weitere Fraktion hinsichtlich der niedriger siedenden Komponente nur in relativ geringer Konzentration vorliegt. Anschließend wird die Fraktion bzw. Lösung, die stärker mit der niedriger siedenden Komponente angereichert ist, einem Druck ausgesetzt sowie hiernach verdampft, um das gasförmige Arbeitsfluid zu erhalten, das eine Gasturbine antreibt. Das expandierte Arbeitsfluid kann sodann in einem Kondensator kondensiert und mit der Fraktion mit dem geringeren Anteil an niedriger siedender Komponente zusammengeführt werden. Der grundlegende Kalina-Prozeß findet sich ausführlich auch in der US 4,489,563 beschrieben. Als niedrigsiedende Komponente kommt in der Regel Ammoniak zum Einsatz, als höhersiedende Komponente des Gemisches in der Regel Wasser.

In dem vorliegenden Fall können selbstverständlich auch Weiterentwicklungen des Kalina-Prozesses zur Anwendung kommen. Beispielsweise kann, wie in der US 4,604,867 offenbart, das Arbeitsfluid nach der anfänglichen Expansion in der Turbine einem Wiedererhitzer zugeführt werden, um die für eine Überhitzung erforderliche Temperatur zu erhalten und um anschließend in die Turbine rücküberführt und expandiert werden zu können. Selbstverständlich umfaßt der gemäß der vorliegenden Erfindung zur Anwendung gelangende Kalina-Prozeß auch eine in der EP 694 678 B1 beschriebene Weiterentwicklung, wonach aus dem kondensierten Arbeitsfluid ein erster Strom, der einen höheren Anteil einer niedrig siedenden Komponente als der kondensierte Strom hat, ein zweiter Strom, der einen niedrigeren Anteil einer niedrig siedenden Komponente als der kondensierte Strom hat, und ein dritter Strom, der den gleichen Anteil einer niedrig siedenden Komponente wie der kondensierte Strom hat, erzeugt wird und wobei der erste, zweite und dritte Strom multiplen Destillationsvorgängen unterworfen werden, um ein flüssiges Arbeitsfluid zu erzeugen, das anschließend verdampft werden kann.

Die ORC-Anlage umfaßt ebenfalls eine Dampfturbine, in der ein Arbeitsmedium entspannt wird. Um niedrige Temperaturen zur Stromerzeugung nutzen zu können, wird nicht Wasser sondern ein organischer Wärmeträger als Arbeitsfluid bzw. Arbeitsmedium eingesetzt, der schon bei niedrigem Druck und niedriger Temperatur verdampft. Geeignete ORC-Arbeitsmedien stellen beispielsweise leicht flüchtige Kohlenwasserstoffe wie Iso-Pentan und Iso-Oktan und deren Gemische sowie leicht flüchtige Silikonöle dar. Ferner können auch alternativ oder zusätzlich leicht flüchtige partiell oder vollständig halogenierte Kohlenwasserstoffe wie Perfluorpentan eingesetzt werden. Diese Verbindungsklasse ist auch unter der Bezeichnung Frigene bekannt. Mit diesen Arbeitsmedien können in einer ORC-Anlage Temperaturbereiche von etwa 90 bis 300°C zur Erzeugung elektrischer Energie erschlossen werden.

Dabei kann vorgesehen sein, daß mindestens eine Abführungsleitung, die sich an die Zuführungsleitung anschließt zum Abtransport des zur Verdampfung eingesetzten, abgekühlten Fluids. Diese Zuführungsleitung geht somit vorzugsweise stromabwärts von dem Verdampfer in die Abführungsleitung über. In einer weiteren Ausführungsform ist erfindungsgemäß ferner vorgesehen, daß die Abführungsleitung in Verbindung steht mit den Einlaßrohren der äußeren Zone bzw. der Teilzonen der äußeren Zone.

Gemäß einem weiteren Aspekt der Erfindung wird vorgeschlagen, daß bei mindestens einer zweiten Anlage zur Durchführung eines geschlossenen Gasturbinenprozesses, mit der Inertgase, insbesondere Stickstoff, Kohlendioxid und/oder Edelgase, verdichtbar, in einem Gaserhitzer erhitzbar und in einer Gasturbinenstufe entspannbar sind, der Gaserhitzer dieser zweiten Anlage zumindest einen Abschnitt der Abführungsleitung und/oder des Kühlsystems umfaßt.

Die vorangehend beschriebenen Anlagen zur Durchführung geschlossener Turbinenkreislaufprozesse haben den Vorteil, auch noch das thermische Potential relativ geringer Temperaturunterschiede energetisch ausbeuten zu können. Bei diesen Anlagen kommen regelmäßig Verdichter, Gasturbinen, Verdampfer, Kondensatoren und Regeneratoren zum Einsatz.

Gemäß einem weiteren Aspekt der vorliegenden Erfindung kann der Auslaß des ersten und/oder zweiten Rohrleitungssystems auch mit beliebigen weiteren Anlagen gekoppelt sein, mit denen sich, vorzugsweise in einem geschlossenen System, Gasturbinen durch Verdampfung leicht flüchtiger Komponenten oder verflüssigter Gase antreiben lassen. Exemplarisch sei auf den geschlossenen Gasturbinenprozeß gemäß der DE 36 05 466 A1 hingewiesen, bei dem zunächst Inertgase wie Stickstoff oder Kohlendioxid oder vorzugsweise Edelgase wie Xenon in einem Kreisprozeß verdichtet, in einem Gaserhitzer indirekt erhitzt und anschließend in einer Gasturbinenstufe entspannt werden. Darüber hinaus können diese entspannten aber noch energiereichen Gase einem Druckfusionator zugeführt werden, in dem sie mit einem Arbeitsmedium wie z.B. Wasser, einem Frigen oder einem anderen stabilen Medium, welches vorgewärmt sein kann, oder mit dessen Dampf fusionieren, wobei das Arbeitsmedium verdampft und überhitzt bzw. dessen Dampf überhitzt und das Gemisch einer zweiten Gasturbinenstufe zur Entspannung zugeführt wird. Die Herstellung verflüssigter Gase z.B. nach dem Linde-Verfahren, ist dem Fachmann bekannt. Diese Verfahren können ohne weiteres bei dem Einsatz des erfindungsgemäßen Wärmespeichers mit herangezogen werden. So läßt sich einerseits die bei der Gasverflüssigung anfallende Wärme zur Aufheizung der inneren Zone nutzen, während die verflüssigten Gase bei Bedarf, gegebenenfalls durch gesteuerte Zuführung thermischer Energie aus der inneren Zone des erfindungsgemäßen Wärmespeichers, als entspanntes Arbeitsfluid zum Antrieb einer Gasturbine eingesetzt werden können. Der Einsatz verflüssigter Gase, z.B. von verflüssigter Luft bzw. der daraus gewonnenen Inertgase, läßt sich insoweit sehr elegant mit dem erfindungsgemäßen Wärmespeicher nutzen, als die Energie zur Gasverflüssigung aus überschüssiger Energie, die zum Beispiel als ungenutzter Nachtstrom oder infolge von Überkapazitäten bei Kraftwerken anfällt, gewonnen werden kann. Verflüssigte Gase lassen sich ohne weiteres transportieren und auch über längere Zeiträume lagern und können somit ohne weiteres für einen Einsatz mit dem erfindungsgemäßen Wärmespeicher eingesetzt werden.

Mehrkammerwärmespeicher im Sinne der vorliegenden Erfindung zeichnen sich ferner dadurch aus, daß die Sohle mindestens eine thermische Dämmschicht und mindestens eine, insbesondere oberhalb der Dämmschicht angebrachte, Abdichtschicht, insbesondere eine im wesentlichen wasserdichte, flexible Kunststoffdichtungsfolie, umfaßt und daß die Seitenwand mindestens eine thermische Dämmschicht und/oder mindestens eine, insbesondere innenliegende, Abdichtschicht umfaßt, und/oder daß die Abdeckung der Grubenstruktur mindestens eine thermische Dämmschicht und mindestens eine oberhalb der Dämmschicht vorliegende Abdichtschicht umfaßt.

Als geeignete Abdichtschichten können beispielsweise Kunststoffbahnen, wie sie aus dem Tunnelbau bekannt sind, eingesetzt werden. Bevorzugt wird auf thermoplastische, flexible Kunststoffolien, besonders bevorzugt auf Polyethylenfolien aus z.B. LD-PE, LLD-PE oder HD-PE zurückgegriffen. Als besonders vorteilhaft hat sich der Einsatz einer biaxialen LD-PE-Folie erwiesen. Zur Erlangung einer verbesserten Dimensionsstabilität wird häufig auch auf solche flexiblen Polyolefinfolien, insbesondere mit teilkristalliner Struktur, zurückgegriffen, die gegebenenfalls auch über eine Glasvliesarmierung verfügen. Diese Armierung kann z.B. die innenliegende Schicht einer coextrudierten Folie sein. Geeignete Abdichtbahnen sind z.B. über die Sarnafil GmbH, Feldkirchen, unter den Bezeichnungen MP 970, MP G 950, MC G 770 zu beziehen. Grundsätzlich kann auch für die Abdichtschicht auf Lkw-Folien zurückgegriffen werden.

Als thermische Dämmschicht der Seitenwand und/oder als Abdeckung kann insbesondere jeweils mindestens eine Lage umfassend, insbesondere benachbarte, geschäumte Körper, insbesondere großformatige und/oder geschlossenporige, Hartschaumstoffblöcke vorgesehen sein. Geeignete Hartschaumstoffblöcke enthalten vorzugsweise expandiertes Polystyrol.

Ferner kann vorgesehen sein, daß die thermische Dämmschicht der Sohle mindestens eine Lage aus, insbesondere benachbarten, geschäumten Körpern, insbesondere großformatigen und/oder geschlossenporigen Hartschaumblöcken, und/oder mindestens eine Schicht aus mineralischen Dämmstoffen, insbesondere geschäumten Glas, Blähton und/oder Blähschiefer, umfaßt.

Zur Wärmedämmung werden bevorzugt Blöcke aus extrudiertem, geschlossenporigem Polystyrolhartschaum (EPS) eingesetzt, wie sie beispielsweise beim Bau von Verkehrsdämmen auf weichem Untergrund bekannt sind. Für die Wärmedämmung der Sohl- und Seitenwandungsflächen sind geschäumte Körper mit einer Rohdichte von etwa 20 bis 30 kg/m³ und für die Dämmschicht der Abdeckung solche mit Rohdichten von etwa 10 bis 20 kg/m³ geeignet. Die Druckfestigkeit dieser Dämmwerkstoffe ist im allgemeinen für Bauhöhen von Erdwannenspeichern bis zu ca. 8 m ohne weiteres ausreichend. Bei größeren Bauhöhen empfiehlt es sich, insbesondere in der Sohle mineralische Dämmschichten zu verwenden.

Ferner verfügen die erfindungsgemäßen Mehrkammerwärmespeicher vorzugsweise über mindestens ein Fluideinlaßrohr, insbesondere benachbart zur Unterseite der inneren Abdichtschicht der Abdeckung, zur Abgabe von Fluid in die äußere Zone oder in eine Teilzone der äußeren Zone und/oder mindestens ein Fluidauslaßrohr, insbesondere auf der, in oder benachbart zur Sohle, zur Entnahme von Fluid aus der äußeren Zone.

Gemäß einem weiteren Aspekt verfügt der Mehrkammerwärmespeicher über mindestens eine an oder im Bereich der Außenseite von Sohle und/oder Seitenwand vorliegende Abdichtschicht, mindestens eine außerhalb dieser Abdichtschicht im Bereich von Sohle und/oder Seitenwand zumindest bereichsweise vorliegende Sickerschicht, insbesondere umfassend eine hohlraumreiche Granulatschicht, und/oder mindestens eine weitere, die Sickerschicht nach unten und/oder zur Seite abgrenzende Abdichtschicht. Von besonderem Vorteil ist hierbei, wenn die Sickerschicht in Wirkverbindung mit der Drainageschicht der Abdeckung steht und/oder mindestens eine Entnahmeleitung aufweist.

Gemäß einem weiteren Aspekt zeichnet sich ein erfindungsgemäßer Mehrkammerwärmespeicher auch aus durch eine im wesentlichen flüssigkeitsdichte Wannenkonstruktion und/oder Membranwanne, die die Grubenstruktur umgibt, um Grundwasser von dieser fernzuhalten, wobei die Wannenkonstruktion und/oder die zwischen Sohle und/oder Seitenwand der Grubenstruktur und der Innenwand der Wannenkonstruktion und/oder der Membranwanne vorliegende Schüttung Ballastmaterial, insbesondere grobkörnige Elektroofenschlacke, umfaßt.

Zwar besteht die Möglichkeit, erfindungsgemäße Mehrkammerwärmespeicher in Gebieten mit hohem Grundwasserstand auf das Gelände aufzusetzen. Dieses geht jedoch häufig zu Lasten des Orts- oder Landschaftsbildes. Mit der vorhergehend dargestellten Ausführungsform lassen sich erfindungsgemäße Mehrkammerwärmespeicher jetzt auch ohne weiteres an Orten mit hohem Grundwasserstand errichten. Dabei hat sich ein Mehrkammerwärmespeicher mit einer sich zumindest bereichsweise an die Außenwand der Wannenkonstruktion und/oder der Membranwanne anschließenden grobkörnigen Bodenschicht und mindestens einem, diese Schicht umgebenden Schutzvlies und/oder -gewebe als besonders vorteilhaft herausgestellt.

In einer weiteren Ausführungsform verfügen erfindungsgemäße Wärmespeicher ebenfalls über mindestens eine Betriebs- und/oder Steuereinheit, enthaltend mindestens eine Umwälzpumpe, einen Wärmetauscher und/oder eine Zu- und Ablauf-, insbesondere, eine Ventil-und/oder Sprührohrsteuerung.

Erfindungsgemäße Mehrkammerwärmespeicher können ferner mindestens einen zumindest bereichsweise auf der Abdeckung und/oder, insbesondere im Erdreich, oberhalb der Abdekkung vorliegenden Teich umfassen.

Eine bevorzugte Ausführungsform der Erfindung zeichnet sich dadurch aus, daß die Trennwand bzw. Trennwände geneigt und/oder zumindest abschnittsweise im wesentlichen vertikal ausgerichtet sind und sich im wesentlichen von der Abdeckung, insbesondere unter Ausbildung einer im wesentlichen fluiddichten Anbindung an diese, bis zur Sohle erstrecken.

Gemäß einer weiteren Ausführungsform ist vorgesehen, daß die Trennwand, insbesondere im Bereich der Sohle, mindestens eine Durchlaßöffnung aufweist.

In einer weiteren vorteilhaften Ausgestaltung der Erfindung kann vorgesehen sein, daß mindestens eine Trennwand und/oder eine, insbesondere zur Trennwand benachbarte, Abdichtschicht zumindest bereichsweise mit der Sohle, insbesondere fluiddicht, unter Ausbildung abgeschlossener Zonen verbunden ist.

Erfindungsgemäße Mehrkammerwärmespeicher zeichnen sich insbesondere auch dadurch aus, daß mindestens eine Trennwand und/oder eine, insbesondere zur Trennwand benachbarte Abdichtschicht die Grubenstruktur in fluiddichte und/oder thermisch isolierte Zonen aufteilt, zwischen denen im wesentlichen kein freier Austausch an Fluid und/oder Wärmeenergie stattfindet. Beispielsweise läßt sich durch Anbringung einer umlaufenden, mit der Sohlabdichtung verschweißten vertikalen Abdichtungsschicht thermisch eine innenliegende Teilzone der äußeren Zone gegenüber Randzonen der äußeren Zone abdichten und abgrenzen. Die Bewirtschaftung solcher fluiddicht abgegrenzter Teilzonen erfolgt hierbei unabhängig voneinander, so daß jede dieser Teilzonen über jeweils mindestens einen Ein- und einen Auslaß verfügt.

Eine alternative Ausgestaltung der Erfindung sieht vor, daß mindestens eine Trennwand und/oder Abdichtschicht zumindest bereichsweise im wesentlichen horizontal, insbesondere unter Aufteilung der Grubenfüllung in einen oberen und einen unteren Bereich, angeordnet ist. Indem man in die Grubenfüllung auch eine horizontale Trennwand oder Abdichtschicht einzieht, kann z.B. zusätzlich zu den vertikal ausgerichteten Speicherzonen eine weitere, unter- oder oberhalb dieser Zonen angeordnete, insbesondere als Randzone fungierende Speicherzone ausgebildet werden. Des weiteren ist es möglich, diese horizontale Speicherzone durch die Anbringung vertikaler Trennwände und/oder Abdichtschichten selber wiederum zu segmentieren.

Dabei kann erfindungsgemäß vorgesehen sein, daß die innere Abdichtschicht fluiddicht mit der Seitenwandabdichtung verbunden ist oder an dieser anliegend zumindest abschnittsweise die Seitenwand hoch geführt ist.

Von Vorteil ist es weiterhin, wenn der erfindungsgemäße Mehrkammerwärmespeicher über mindestens eine über der Abdichtschicht der Sohle zumindest abschnittsweise vorliegende Vlies-, geotextile und/oder mineralische Schutzschicht verfügt. Um die flüssigkeitsdichte Abdichtschicht auf der Sohle vor Beschädigung durch das aufliegende körnige oder splitterartige Grubenfüllungsmaterial zu schützen, bietet es sich häufig an, chemisch inerte und wasserneutrale Schutzschichten auf der obersten Abdichtschicht der Sohle anzubringen.

In einer besonders zweckmäßigen Ausgestaltung verfügt der erfindungsgemäße Mehrkammerwärmespeicher über mindestens ein in der Grubenstruktur benachbart zur Sohle oder auf oder in der Sohle, insbesondere in einer Senke, angebrachtes Fluidauslaßrohr, insbesondere Drainagerohr, und/oder mindestens ein in, unterhalb oder benachbart zu der Abdeckung angebrachtes Einlaßrohr, insbesondere enthaltend ein Sprührohr oder mindestens eine Sprühdüse. Der Wärmeeintrag in den Speicher bzw. die Speicherzonen erfolgt bevorzugt über das Versprühen von Wasser über die Oberfläche der Speicherfüllung. Hierdurch wird ein sehr gleichmäßiger Wärmeeintrag in die einzelnen Teilzonen und eine sehr gleichmäßige Temperaturverteilung der Grubenfüllung von der Abdeckung bis zur Sohle erreicht.

Dabei kann vorgesehen sein, daß jede Teilzone über mindestens ein Auslaßrohr und/oder über mindestens ein Einlaßrohr verfügt bzw. verfügen.

Geeignete Mehrkammerwärmespeicher verfügen ebenfalls über mindestens eine unterhalb der thermischen Dämmschicht der Abdeckung vorliegende Wasserdampfdiffusionssperrschicht, insbesondere ein mit einer Aluminiumfolie kaschiertes Schutzvlies, und/oder mindestens ein oberhalb der Abdichtschicht der Abdeckung vorliegendes Schutzvlies, eine textile Deckendichtung, (co)extrudierte Kunststoffolie, Drainageschicht, Bodenschicht und/oder Humusschicht.

Die der Erfindung zugrunde liegende Aufgabe wird des weiteren durch ein Verfahren zur Erzeugung von elektrischer Energie, umfassend die Schritte
a) Zurverfügungstellen eines Mehrkammerwärmespeichers gemäß einem der vorangehenden Ansprüche,
b) Einspeisen von Energie in die innere Zone über das erste Rohrleitungssystem mittels Durchleiten von erhitztem Fluid, so daß die Temperatur der inneren Zone im Durchschnitt mindestens 110° C beträgt,
c) Nutzen der in der inneren Zone eingespeisten und gespeicherten thermischen Energie zum Verdampfen eines Arbeitsfluids, insbesondere eines Gemisches umfassend Ammoniak und Wasser oder
   zum Verdampfen von flüssigen, leicht flüchtigen organischen Verbindungen oder zum Verdampfen von verflüssigten Inertgasen,
d) Antreiben mindestens einer Dampfturbine durch den beim Verdampfungsvorgang entstehenden Dampf und
e) Umwandlung der Bewegungsenergie der sich bewegenden Dampfturbine in elektrische Energie, gelöst.

Dabei kann vorgesehen sein, daß die Schritte c), d) und/oder e) Bestandteil des Kalina-Prozesses oder des ORC-Prozesses sind.

Gemäß einem weiteren Aspekt stellt das erfindungsgemäße Verfahren darauf ab, daß das zur Verdampfung des Arbeitsfluids eingesetzte erhitzte Fluid über mindestens eine Abführungsleitung nach Verlassen des Verdampfers in die äußere Zone, insbesondere eine Teilzone mit einer Temperatur unterhalb der des einzuspeisenden Fluids, eingespeist wird.

Hierbei wird ferner vorgeschlagen, daß das Kühlsystem oder die Abführungsleitung genutzt wird, um einen geschlossenen Gasturbinenprozess zu betreiben, in dem verdichtete, verflüssigte Inertgase, insbesondere Stickstoff, Kohlendioxid und/oder Edelgase, über das Kühlsystem und/oder die Abführungsleitung im verflüssigten und/oder verdampften Zustand erhitzt und anschließend in einer Gasturbinenstufe entspannt werden. Die thermische Restenergie des entspannten Arbeitsfluids, das die Gasturbine verlassen hat, oder das zur Verdampfung dieses Arbeitsfluids eingesetzten, ursprünglich der inneren Zone entstammenden Fluids wird bei der vorangehenden Ausführungsform genutzt, um einen zweiten Gasturbinenprozeß in Gang zu setzen. Vorzugsweise stellt hierbei der erste bzw. Hauptgasturbinenprozeß einen Kalina- oder ORC-Prozeß dar. Ein erfindungsgemäßer Wärmespeicher kann somit ebenfalls neben einer Kalina- oder ORC-Anlage zusätzlich auch eine Anlage zur Durchführung eines geschlossenen Gasturbinenprozesses umfassen, mit der Inertgase, insbesondere Stickstoff, Kohlendioxid und/oder Erdgase, verdichtbar, in einem Gaserhitzer erhitzbar und in einer Gasturbinenstufe entspannbar sind, insbesondere wie in der DE 36 05 466 A1 beschrieben.

Schließlich wird erfindungsgemäß in einer weiteren Ausführungsform darauf abgestellt, daß das erste Rohrleitungssystem zur Einspeisung von thermischer Energie in die innere Zone und daß das zweite Rohrleitungssystem zur Entnahme von thermischer Energie aus der inneren Zone zum Verdampfen des Arbeitsfluids eingesetzt werden.

Der Erfindung lag die überraschende Erkenntnis zugrunde, daß sich Mehrkammerwärmespeicher neben der Eignung für eine bedarfsgerechte Warmwasserversorgung ebenfalls bedarforientiert für die Erzeugung elektrischer Energie nutzen lassen.

Vorteilhaft ist ferner, daß Flüssigkeit aus der äußeren Zone, insbesondere aus den Randzonen dieser äußeren Zone des erfindungsgemäßen Wärmespeichers als Kühlwasser für die Kondensierung des expandierten gasförmigen Arbeitsfluids herangezogen werden kann, um anschließend entweder als Warmwasser verwendet oder wieder in die äußere Zone des Wärmespeichers eingespeist zu werden, vorzugsweise in eine Teilzone, die selber keine Randzone mehr darstellt.

Im Folgenden wird zur weiteren Erläuterung und zum besseren Verständnis der Erfindung ein Ausführungsbeispiel unter Bezugnahme auf die beigefügten Zeichnungen näher beschrieben. Es zeigen:
- Figur 1: einen erfindungsgemäßen Mehrkammerwärmespeicher in perspektivischer, schematischer Draufsicht;
- Figur 2: den erfindungsgemäßen Wärmespeicher gemäß Figur 1 ausschnittsweise in schematischer Querschnittsansicht;
- Figur 3: eine schematische Querschnittsansicht einer alternativen Ausführungsform eines Mehrkammerwärmespeichers gemäß Figur 1, und
- Figur 4: eine schematische Darstellung einer Anlage zur Durchführung des Kalina- Prozesses.

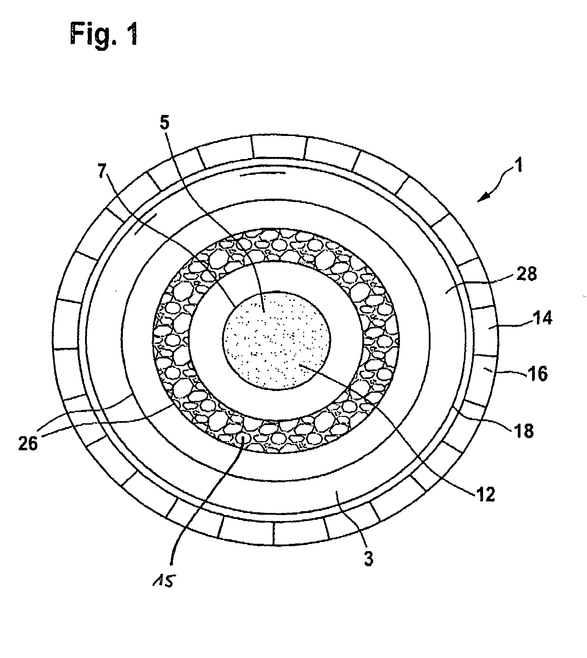

Figur 1 ist ein erfindungsgemäßer Mehrkammerwärmespeicher 1 in schematischer Draufsicht zu entnehmen. Die Seitenwand 14 ist mit einer thermischen Dämmschicht 16 aus Hartschaumblöcken sowie innenliegend mit einer Abdichtschicht 18 in Form einer Kunststofflage versehen. Trennwände 26 unterteilen die äußere Zone 3 vier separierte Teilzonen 28. Die Trennwände 26 sind umlaufend, und damit als Endlostrennwände angebracht. Die äußere Zone 3 umgibt eine innere Zone 5 mit einer Grubenfüllung 12 aus im wesentlichen sehr feinkörnigem Material, z.B. Sand. Die innere Zone 5 ist von der äußeren Zone 3 durch eine fluiddichte Trennwand 7 abgetrennt. Die einzelnen Teilzonen 28 sind mit einem grobkörnigeren, splittartigen Grubenmaterial 15 gefüllt (exemplarisch abgebildet für nur eine Teilzone). Optional können die Freiräume zwischen dem Grubenmaterial mit Warmwasser ausgefüllt sein. Idealerweise nimmt die Temperatur des Grubenmaterials 15 in den Teilzonen von außen nach innen zu, wobei das Füllmaterial 12 der inneren Zone 5 die höchste Temperatur aufweist. In dem Grubenmaterial 12 der inneren Zone 5 ist ein erstes Rohrleitungssystem 90 (nicht abgebildet) eingebettet, enthaltend einen Rohreinlaß und einen Rohrauslaß.

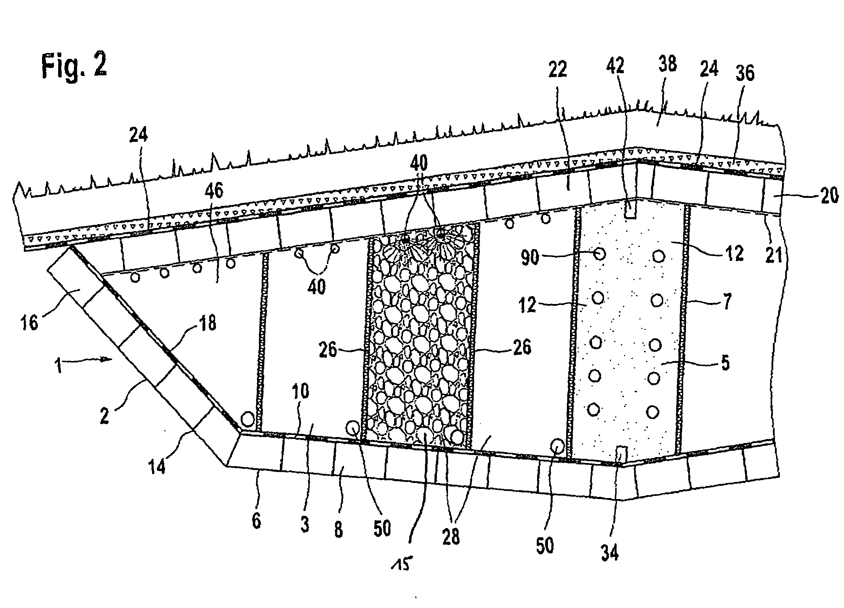

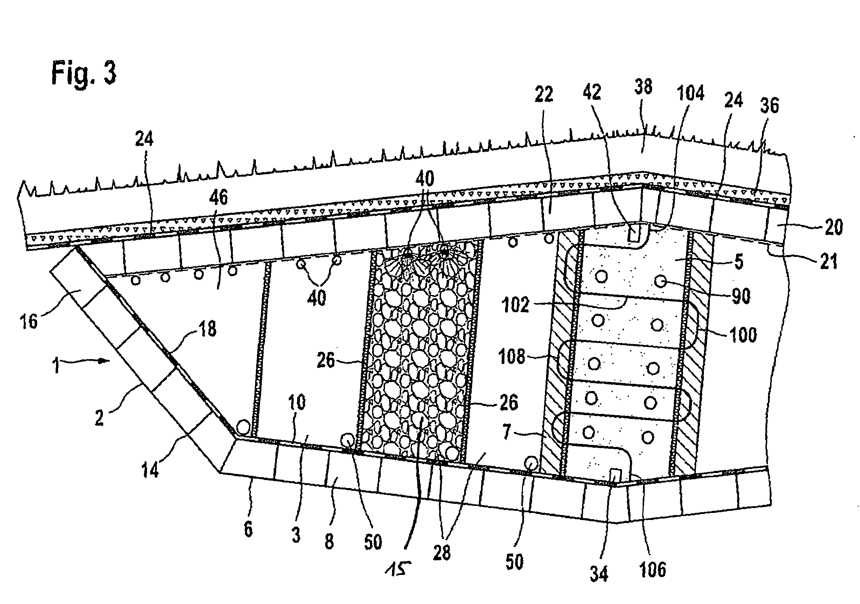

In Figur 2 wird ein Teil eines erfindungsgemäßen Mehrkammerwärmespeichers 1 gemäß Fig. 1 in Querschnittsansicht gezeigt. Die Grubenstruktur 2 des Wärmespeichers 1 ist zum überwiegenden Teil in das Erdreich 4 eingelassen. Die Sohle 6 ist zum Zentrum der Grubenstruktur geneigt und umfaßt eine aus geschlossenporigen Hartschaumblöcken bestehende Dämmschicht 8 und eine auf dieser Dämmschicht aufliegende Abdichtschicht 10 in Form einer Kunststoffdichtungsbahn. Die Grube 2 ist in dem durch die Sohle 6, Seitenwand 14 und Abdeckung 20 gebildeten Raum mit Grubenfüllmaterial gefüllt. Die obere Abdeckung 20 umfaßt vorzugsweise eine Wasserdampfdiffüsionsschicht 21 und eine thermische Dämmschicht 22, beispielsweise aus Hartschaumstoffblöcken gebildet, sowie eine Abdichtschicht 24. Hierauf aufliegend kann beispielsweise eine Drainageschutzschicht 36 angebracht sein, auf die eine Schutzschicht 38 aus z.B. Erdreich aufgetragen werden kann. Während die innere Zone 5 mit einem sehr feinkörnigen Füllmaterial 12, insbesondere Sand, gefüllt ist, liegt in der die innere Zone 5 umgebenden äußeren Zone 3 beispielsweise grobkörniger Kies als Grubenfüllmaterial 15 vor. Der besseren Übersicht halber sind in Figur 2 Grubenfüllungen nicht für sämtliche Teilzonen 28 der äußeren Zone 3 eingezeichnet, sondern nur für eine einzige. Zum Schutz vor Beschädigung durch aufliegende Grubenfüllung 12 kann die Abdichtschicht 10 der Sohle mit einer geotextilen und/oder mineralischen Schutzschicht versehen werden (nicht abgebildet). Geeignete Hartschaumblöcke stellen z.B. solche aus extrudiertem Polystyrolhartschaum dar mit einer Dicke im Bereich von etwa 0,2 bis 1,5 m. Die Seitenwand 14 ist in der in Figur 2 abgebildeten Ausführungsform ähnlich wie die Sohle mit einer thermischen Dämmschicht aus Hartschaumstoffblöcken sowie einer Abdichtschicht 18 in Form einer Kunststofflage versehen. Die Abdichtschicht 18 ist flüssigkeitsdicht mit der Abdichtschicht 10 der Sohle sowie mit der Abdichtschicht 24 der Abdeckung 20 der Grubenstruktur 2 verbunden. Die Auflageflächen für die Sohle 6 und die Seitenwand 14 werden regelmäßig vor der Installierung der Hartschaumstoffblöcke planiert und verdichtet. Die Trennwände 26 der äußeren Zone 3 erstrecken sich regelmäßig von der auf der Grubenfüllung aufliegenden Abdeckung 20 bis zur Sohle 6 oder der Seitenwand 14. In der vorliegenden Ausführungsform sind die Trennwände 26 als wärmeisolierende Kunststoffplatten, die eingeschweißt in einer Kunststoffumhüllung vorliegen, ausgeführt. Auch für die Trennwand 7 zwischen der inneren und äußeren Zone kann auf eine derartige Wand zurückgegriffen werden. Die Trennwände 26 sowie die Trennwand 7 sind vorzugsweise fluiddicht mit der Sohle bzw. der auf der Sohle aufliegenden Abdichtschicht verbunden, so daß zwischen den einzelnen Zonen kein Fluidaustausch stattfinden kann. Auf diese Weise lassen sich Teil- und Randzonen (28, 46) erhalten, die völlig unabhängig voneinander bewirtschaftet werden können. In einem solchen Fall ist jede abgeschlossene Teilzone mit einem Abfluß- bzw. Drainagerohr 50 ausgestattet. In der inneren Zone 5 ist ein erstes Rohrleitungssystem 90 mit einem Einlaß bzw. Einlaßrohr 42 und einem Auslaßrohr 34 angeordnet. Das Einlaßrohr 42 befindet sich vorzugsweise im oberen Bereich der inneren Zone 5. Im vorliegenden Fall ist das erste Rohrleitungssystem 90 wendelförmig in das feinkörnige Grubenmaterial 12 der inneren Zone 5 eingebettet. Selbstverständlich sind beliebige alternative Rohrleitungsgeometrien möglich. Das Auslaßrohr 34 steht in direkter Verbindung mit der Verdampfereinheit einer Anlage zur Durchführung des Kalina- oder OCR-Prozesses (s.a. Figur 3). Über das erste Rohrleitungssystem 90 kann die innere Zone 5 beispielsweise durch Nutzung industrieller Abwärme auf Temperaturen oberhalb von 80°C, vorzugsweise oberhalb von 100°C aufgeheizt werden. Gleichfalls ist es mit Hilfe des ersten Rohrleitungssystems 90 möglich, in der inneren Zone 5 gespeicherte thermische Energie zur Erwärmung von Fluiden, beispielsweise Wasser, zu verwenden, das sodann zur Erzeugung elektrischer Energie, z.B. über den Kalina- oder ORC-Prozeß genutzt werden kann. Dieses Fluid kann z.B. als vorgewärmtes Fluid der äußeren Zone 3, insbesondere einer innenliegenden Teilzone 28, über das Drainagerohr 50 entnommen werden.

Im Standartbetrieb sind die jeweiligen Zellen bzw. Teilzonen 28 der äußeren Zone 3 nicht mit Wasser gefüllt. Wasser dient üblicherweise nur als Wärmeübertragungsmedium, das seine Wärmeenergie an die in der jeweiligen Zone vorliegende Grubenfüllung 12 abgibt und durch das Drainagerohr 50 wieder abgeführt wird. Auf diese Weise kommt es nicht zu den konvektiven Wärmebewegungen, wie sie von mit Wasser gefüllten Zellen bekannt sind. Allerdings kann das Hohlraumvolumen der Grubenfüllung durchaus auch mit heißem Wasser aufgefüllt werden, um eine noch höhere Energiemenge zu speichern. Im allgemeinen hat es sich als zweckmäßig erwiesen, wenn im Gesamtspeicher in etwa zwischen 30 bis 50 % des freien Porenvolumens mit Wasser gefüllt vorliegen. Der Wärmeeintrag in die äußere Zone 3 des erfindungsgemäßen Wärmespeichers sowie die spätere Entnahme erfolgen vorteilhafterweise durch Versprühen von Wasser mittels Spühlrohren 40 über die Oberfläche der Grubenfüllung 15. Hierdurch wird auf sehr zügige und wirksame Weise eine sehr gleichmäßige Temperaturverteilung entlang der gesamten Höhe einer Speicherzone 28 erreicht. Des weiteren läßt das Sprühverfahren die Umschichtung von Restwärme in andere, thermisch weitgehend entleerte Speicherzellen 28 zu, da kein direkter Rückfluß von Wasser in die im Entnahmestatus befmdlichen Speicherzellen notwendig ist. Damit kann auch Niedertemperaturrestwärme unterhalb der Minimaltemperatur von Ein-Karnmer-Heißwasserwärmespeichem ohne Beeinträchtigung mehrerer Speicherzonen wieder als Nutzwärme gespeichert werden.

Die äußere Zone 3 des erfindungsgemäßen Mehrkammerwärmespeichers mit thermisch voneinander isolierten und individuell zu bewirtschaftenden Volumensegmenten 28 erlaubt z.B. eine Optimierung des Nahwärmesystems. Bei geeigneter Auslegung der einzelnen Speicherzellen auf die zeitlich, im Volumen und bezüglich Temperatur zur Verfügung stehenden Wärmequellen und der zu bewirtschaftenden Wärmeverbraucher ist eine vielfältige und selektive Nutzung von Wärme möglich. Innerhalb der Grubenstruktur bilden wärmeleitungsbedingte Wärmeabflüsse aus inneren Hochtemperaturzonen in äußere Niedertemperaturzonen eine Wärmequelle für die äußeren Randzonenspeicher auf relativ niedrigem Temperaturniveau. Die äußeren Niedertemperaturzonen minimieren zudem den Temperaturunterschied zwischen den Kern-, Zwischen- und Randzonen und dem umgebenden Erdreich und damit den Wärmeverlust des Gesamtsystems an das umgebende Erdreich.

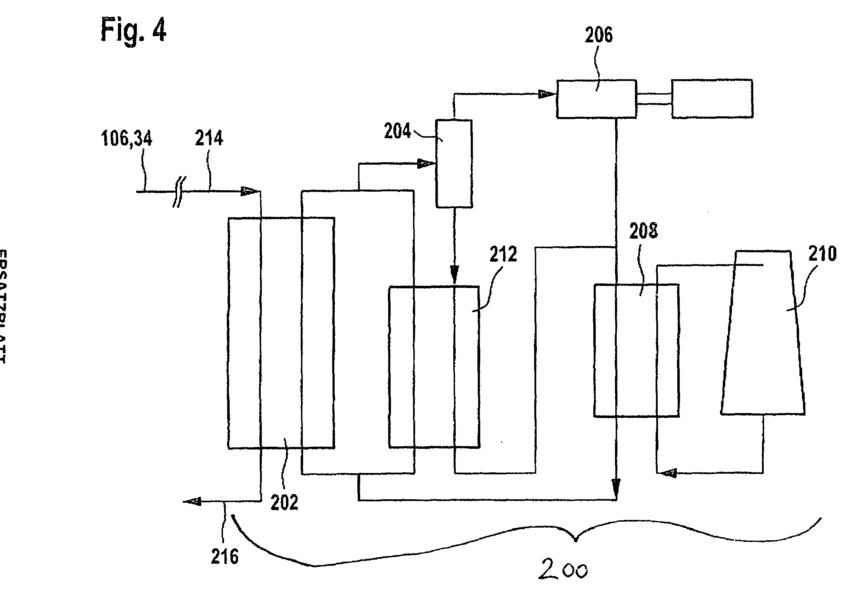

Figur 3 zeigt einen erfindungsgemäßen Mehrkammerwännespeicher 1, dessen innere Zone 5 neben einem ersten Rohrleitungssystem 90 für den Eintrag thermischer Energie auch ein zweites Rohrleitungssystem 100 für die Entnahme von thermischer Energie aus der inneren Zone 5 aufweist. Das zweite Rohrleitungssystem 100 verfügt über in der inneren Zone vorliegende Abschnitte 102, die im wesentlichen geradlinig ausgeführt sind und die über Krümmereinheiten 108, die in der Trennwand 7 zwischen innerer und äußerer Zone vorliegen, verbunden sind. Um Wärmeverluste zu vermeiden, ist die Trennwand thermisch gegenüber der äußeren Zone isoliert. Diese Art der Konstruktion erlaubt es, auf besonders einfache Art und Weise defekte bzw. undichte Rohrleitungsabschnitte 102 auszutauschen, ohne daß die innere Zone freigelegt werden müßte. Über den Einlaß 104 gelangt Fluid in das in der inneren Zone vorliegende zweite Rohrleitungssystem 100. Wie bereits geschildert, liegt die Temperatur des in dem zweiten Rohrleitungssystem 100 transportierten Fluids unterhalb der der inneren Zone 5 und entzieht somit dem Material der inneren Zone 5 unter Erwärmung thermische Energie. Über den Auslaß 106 kann dieses erwärmte Fluid dann mittels einer Zuführleitung 214 z.B. einer Kalina-Anlage 200 zwecks Erzeugung elektrischer Energie zugeführt werden (s.a. Figur 4).

Wie Figur 4 zu entnehmen ist, umfaßt eine solche Anlage 200 einen Verdampfer 202, einen Separator 204, mit dem die leichter flüchtige Komponente Ammoniak von der schwerer flüchtigen Komponente Wasser getrennt wird, eine Gasturbine 206, einen Kondensator 208, ein Kühlsystem 210 sowie einen Verdichter 212.

Die Rohrleitung 214 kann z.B. unmittelbar mit dem Auslaß 34 des ersten Rohrleitungssystems 90 oder mit dem Auslaß 106 des zweiten Rohrleitungssystems 100 der inneren Zone 5 verbunden werden und führt somit heißes Fluid dem Verdampfer 202 zu. Bevorzugt wird heißes Fluid der inneren Zone 5 über das zweite Rohrleitungssystem 100 entnommen, während das erste Rohrleitungssystem 90 dazu dient, Wärmeenergie in die innere Zone 5 einzutragen. In dem Verdampfer wird das Ammoniak/Wasser-Gemisch verdampft und anschließend in einen Fluidstrom, der mit Ammoniak angereichert ist, und einen solchen, der mit Wasser angereichert ist, aufgeteilt, wobei ersterer vor Eintritt in die Gasturbine 206 vorzugsweise zusätzlich verdichtet wird. Das der inneren Zone 5 entnommene heiße Wasser kühlt sich in dem Verdampfer ab und kann z.B. über die Leitung 216 in eine Teilzone 28 der äußeren Zone 3 des Wärmespeichers 1 eingespeist werden. Auf diese Weise kann das zunächst in der inneren Zone 5 aufgeheizte Wasser nach Verwendung in dem Kalina-Prozeß wiederum für die Bewirtschaftung des erfindungsgemäßen Mehrkammerwärmespeichers herangezogen werden. In Abhängigkeit vom Temperaturprofil der Teilzonen 28 der äußeren Zone 3 des Wärmespeichers 1 kann das im Kalina-Prozeß heruntergekühlte Wasser somit in Abhängigkeit von seiner Temperatur in die jeweils in Frage kommende Teilzone eingespeist werden.

Sämtliche in der Beschreibung, den nachfolgenden Patentansprüchen den Zeichnungen dargestellten Merkmale können sowohl einzeln als auch in beliebiger Kombination miteinander erfindungswesentlich sein.

### Bezugszeichenliste

- 1: Mehrkammerwärmespeicher
- 2: Grubenstruktur
- 3: äußere Zone
- 4: Erdreich
- 5: innere Zone
- 6: Sohle
- 7: Trennwand zwischen innerer und äußerer Zone
- 8: Dämmschicht der Sohle 6
- 10: Abdichtschicht der Sohle 6
- 12: Grubenfüllung der inneren Zone
- 14: Seitenwand
- 15: Grubenfüllung der äußeren Zone
- 16: thermische Dämmschicht der Seitenwand
- 18: Abdichtschicht der Seitenwand
- 20: Abdeckung
- 21: Wasserdampfdiffusionsschicht
- 22: thermische Dämmschicht
- 24: Abdichtung der Abdeckung
- 26: Trennwand
- 28: Teilzone, Kammer
- 34: Drainagerohr, Auslaßrohr
- 36: Drainageschutzschicht
- 38: Schutzschicht
- 40: Sprührohr
- 42: Einlaßrohr
- 46: Randzone
- 50: Drainagerohr
- 90: erstes Rohrleitungssystem
- 100: zweites Rohrleitungssystem
- 102: Abschnitte des zweiten Rohrleitungssystems
- 104: Einlaß des zweiten Rohrleitungssystems
- 106: Auslaß des zweiten Rohrleitungssystems
- 108: Krümmereinheit
- 200: Anlage zur Durchführung des Kalina-Prozesses
- 202: Verdampfer
- 204: Separator
- 206: Gasturbine
- 208: Kondensator
- 210: Kühlsystem
- 212: Verdichter
- 214: Zuführungsleitung
- 216: Abführungsleitung

## Patentansprüche

1. Mehrkammerwärmespeicher (1) zur Speicherung von Wärmeenergie sowie für die Erzeugung elektrischer Energie, umfassend
eine, insbesondere in den Boden eingelassene, Grubenstruktur (2), umfassend eine Sohle (6), eine, insbesondere umlaufende, Seitenwand (14) und eine Abdeckung (20), **dadurch gekennzeichnet, dass** die Grubenstruktur (2) mindestens eine innere Zone (5) mit einer ersten Feststoffgrubenfüllung (12) und mindestens eine äußere Zone (3) mit einer zweiten Feststoffgrubenfüllung (15) umfaßt, und die äußere Zone (3) die innere Zone (5) zumindest partiell umgibt, dass die Grubenfüllung (12) der inneren Zone (5) von der Grubenfüllung (15) der äußeren Zone (3) zumindest bereichsweise durch mindestens eine Trennwand (7) separiert ist, dass das Material der ersten Feststoffgrubenfüllung (12) im Durchschnitt über eine geringere Körnung als das der zweiten Feststoffgrubenfüllung (15) verfügt oder zumindest bereichsweise eine kompakte Struktur aufweist, und dass die innere Zone (5) mindestens ein erstes Rohrleitungssystem (90) mit mindestens einem Einlaß (42) in die innere Zone (5) und mindestens einem Auslaß (34) aus der inneren Zone (5) zur Durchleitung von Fluiden umfaßt, das zumindest abschnittsweise in dem Material der ersten Grubenfüllung (12) der inneren Zone (5) vorliegt.

2. Mehrkammerwärmespeicher (1) nach Anspruch 1, **dadurch gekennzeichnet, dass** die äußere Zone (3) im wesentlichen inkompressibles körniges und/oder splittartiges Material als zweite Feststoffgrubenfüllung (15), insbesondere mit einer 8/11 mm-, 11/16 mm- und/oder 11/22 mm-Körnung, umfaßt.

3. Mehrkammerwärmespeicher (1) nach Anspruch 1 oder 2, **dadurch gekennzeichnet, dass** das Material der ersten Feststoffgrubenfüllung (12) Sand umfasst.

4. Mehrkammerwärmespeicher (1) nach einem der vorangehenden Ansprüche, **dadurch gekennzeichnet, dass**
die erste Feststoffgrubenfüllung (12) ein inkompressibles körniges und/oder splittartiges Material mit einer 0/2 mm-, 2/5 mm- und/oder 5/8 mm-Körnung umfaßt.

5. Mehrkammerwärmespeicher (1) nach einem der vorangehenden Ansprüche, **dadurch gekennzeichnet, dass**
die die innere (5) und äußere Zone (3) voneinander trennende Trennwand (7) fluiddicht ist, so dass zwischen der inneren und äußeren Zone im wesentlichen flüssige Fluide nicht austauschbar sind.

6. Mehrkammerwärmespeicher (1) nach einem der vorangehenden Ansprüche, **dadurch gekennzeichnet, dass**
die innere Zone (5) mindestens ein zweites Rohrleitungssystem (100) mit mindestens einem Einlaß in die innere Zone (5) und mindestens einem Auslaß aus der inneren Zone (5) zur Durchleitung von Fluiden umfaßt, das zumindest abschnittsweise in dem Material der ersten Grubenfüllung (12) der inneren Zone (5) vorliegt.

7. Mehrkammerwärmespeicher (1) nach einem der vorangehenden Ansprüche, ferner **gekennzeichnet durch**
mindestens eine Anlage (200) zur Durchführung des Kalina-Prozesses, eine erste Anlage zur Durchführung eines geschlossenen Gasturbinenprozesses, mit der Inertgase, insbesondere Stickstoff, Kohlendioxid und/oder Edelgase, entspannbar sind, und/oder eine Anlage zur Durchführung des ORC-Prozesses, jeweils umfassend mindestens einen Verdampfer (202), mindestens eine Gasturbine (206), mindestens einen Kondensator (208), mindestens einen Verdichter (212) und mindestens ein Kühlsystem (210), jeweils gekoppelt, insbesondere über mindestens eine Zuführleitung (214), an den Auslaß von erstem und/oder zweitem Rohrleitungssystem (90, 100).

8. Mehrkammerwärmespeicher (1) nach Anspruch 7, **gekennzeichnet durch** mindestens eine Abführungsleitung (216), in die die Zuführungsleitung (214) stromabwärts von dem Verdampfer übergeht.

9. Mehrkammerwärmespeicher (1) nach Anspruch 7 oder 8, **gekennzeichnet durch** mindestens eine zweite Anlage zur Durchführung eines geschlossenen Gasturbinenprozesses, mit der Inertgase, insbesondere Stickstoff, Kohlendioxid und/oder Edelgase, verdichtbar, in einem Gaserhitzer erhitzbar und in einer Gasturbinenstufe entspannbar sind, wobei zumindest ein Abschnitt der Abführungsleitung (216) und/oder des Kühlsystems (210) den Gaserhitzer dieser zweiten Anlage darstellen.

10. Mehrkammerwärmespeicher (1) nach einem der vorangehenden Ansprüche, **dadurch gekennzeichnet, dass**
die zweite Grubenfüllung (15) der äußeren Zone (3) durch mindestens zwei Trennwände (26) und/oder mindestens eine umlaufende Trennwand in Teilzonen (28) unterteilt ist.

11. Mehrkammerwärmespeicher (1) nach einem der Ansprüche 8 bis 10, **dadurch gekennzeichnet, dass**
die Abführungsleitung (216) in Verbindung steht mit mindestens einem Einlaßrohr (40) der äußeren Zone (3) bzw. mindestens einer Teilzone (28) der äußeren Zone (3).

12. Mehrkammerwärmespeicher (1) nach einem der vorangehenden Ansprüche, **dadurch gekennzeichnet, dass**
die Sohle (6) mindestens eine thermische Dämmschicht (8) und mindestens eine, insbesondere oberhalb der Dämmschicht angebrachte, Abdichtschicht (10), insbesondere eine im wesentlichen wasserdichte, flexible Kunststoffdichtungsfolie, umfaßt und dass die Seitenwand (14) mindestens eine thermische Dämmschicht (16) und/oder mindestens eine, insbesondere innenliegende, Abdichtschicht (18) umfaßt, und/oder dass die Abdeckung (20) der Grubenstruktur (2) mindestens eine thermische Dämmschicht (22) und mindestens eine oberhalb der Dämmschicht vorliegende Abdichtschicht (24) umfaßt.

13. Mehrkammerwärmespeicher (1) nach Anspruch 12, **dadurch gekennzeichnet, dass** die thermische Dämmschicht (16, 22) der Seitenwand (14) und/oder der Abdeckung (20) mindestens eine Lage aus, insbesondere benachbarten, geschäumten Körpern, insbesondere großformatigen und/oder geschlossenporigen, Hartschaumstoffblöcken umfaßt.

14. Mehrkammerwärmespeicher (1) nach einem der vorangehenden Ansprüche, **dadurch gekennzeichnet, dass**
die thermische Dämmschicht (8) der Sohle (6) mindestens eine Lage aus, insbesondere benachbarten, geschäumten Körpern, insbesondere großformatigen und/oder geschlossenporigen Hartschaumblöcken, und/oder mindestens eine Schicht aus mineralischen Dämmstoffen, insbesondere geschäumten Glas, Blähton und/oder Blähschiefer, umfaßt.

15. Mehrkammerwärmespeicher (1) nach einem der vorangehenden Ansprüche, **dadurch gekennzeichnet, dass**
die Trennwand (26) zur Unterteilung der äußeren Zone (3) mindestens eine Wand aus Stein, Beton, Metall und/oder Kunststoff, insbesondere einem druckfesten Kunststoff und/oder eine Kunststofffolie, und dass die Trennwand (7) zwischen innerer (5) und äußerer Zone (3) mindestens eine Wand aus Stein, Beton und/oder Metall umfaßt.

16. Mehrkammerwärmespeicher (1) nach einem der vorangehenden Ansprüche, **gekennzeichnet durch**
mindestens ein Fluideinlaßrohr (40), insbesondere benachbart zur Unterseite der inneren Abdichtschicht der Abdeckung, zur Abgabe von Fluid in die äußere Zone (3) oder in eine Teilzone (28) der äußeren Zone (3) und/oder mindestens ein Fluidauslaßrohr (50), insbesondere auf der, in oder benachbart zur Sohle (6), zur Entnahme von Fluid aus der äußeren Zone (3).

17. Mehrkammerwärmespeicher (1) nach einem der vorangehenden Ansprüche, **dadurch gekennzeichnet, dass**
jede Teilzone (28) der äußeren Zone (3) über mindestens ein Auslaßrohr (50) und/oder über mindestens ein Einlaßrohr (40) verfügt.

18. Mehrkammerwärmespeicher (1) nach einem der vorangehenden Ansprüche, **dadurch gekennzeichnet, dass**
die äußere Zone (3) zumindest bereichsweise seitlich, jeweils zumindest bereichsweise seitlich und unterhalb, jeweils zumindest bereichsweise seitlich und oberhalb oder jeweils zumindest bereichsweise seitlich, unter- und oberhalb der inneren Zone (5) vorliegt, insbesondere diese innere Zone allseitig umgibt.

19. Mehrkammerwärmespeicher (1) nach einem der vorangehenden Ansprüche, **gekennzeichnet durch**
eine im wesentlichen flüssigkeitsdichte Wannenkonstruktion und/oder Membranwanne, die die Grubenstruktur umgibt, um Grundwasser von dieser fernzuhalten, wobei die Wannenkonstruktion und/oder die zwischen Sohle und/oder Seitenwand der Grubenstruktur und der Innenwand der Wannenkonstruktion und/oder der Membranwanne vorliegende Schüttung Ballastmaterial, insbesondere grobkörnige Elektroofenschlacke, umfaßt.

20. Mehrkammerwärmespeicher (1) nach einem der vorangehenden Ansprüche, **gekennzeichnet durch**
mindestens eine Betriebs- und/oder Steuereinheit, enthaltend mindestens eine Umwälzpumpe, einen Wärmetauscher und/oder eine Zu- und Ablauf-, insbesondere eine Ventil- und/oder Sprührohrsteuerung.

21. Verfahren zur Erzeugung von elektrischer Energie, umfassend die Schritte
a) Zurverfügungstellen eines Mehrkammerwärmespeichers gemäß einem der vorangehenden Ansprüche,
b) Einspeisen von Energie in die innere Zone über das erste Rohrleitungssystem mittels Durchleiten von erhitztem Fluid, so dass die Temperatur der inneren Zone im Durchschnitt mindestens 110° C beträgt,
c) Nutzen der in der inneren Zone eingespeisten und gespeicherten thermischen Energie zum Verdampfen eines Arbeitsfluids, insbesondere eines Gemisches umfassend Ammoniak und Wasser, oder zum Verdampfen von flüssigen, leicht flüchtigen organischen Verbindungen oder zum Verdampfen von verflüssigten Gasen, insbesondere verflüssigten Inertgasen,
d) Antreiben mindestens einer Dampfturbine durch den beim Verdampfungsvorgang aus dem sich entspannenden Arbeitsfluid entstehenden Dampf und
e) Umwandlung der Bewegungsenergie der sich bewegenden Dampfturbine in elektrische Energie.

22. Verfahren nach Anspruch 21 **dadurch gekennzeichnet, dass** die Schritte c), d) und/oder e) Bestandteil des Kalina-Prozesses oder des ORC-Prozesses sind.

23. Verfahren nach Anspruch 21 oder 22, **dadurch gekennzeichnet, dass** das zur Verdampfung des Arbeitsfluids eingesetzte erhitzte Fluid über mindestens eine Abführungsleitung nach Verlassen des Verdampfers in die äußere Zone, insbesondere eine Teilzone mit einer Temperatur unterhalb der des einzuspeisenden Fluids, eingespeist wird.

24. Verfahren nach einem der Ansprüche 21 bis 23, **dadurch gekennzeichnet, dass** das Kühlsystem oder die Abführungsleitung genutzt wird, um einen geschlossenen Gasturbinenprozess zu betreiben, in dem verdichtete, verflüssigte Inertgase, insbesondere Stickstoff, Kohlendioxid und/oder Edelgase, über das Kühlsystem und/oder die Abführungsleitung im verflüssigten und/oder verdampften Zustand erhitzt und anschließend in einer Gasturbinenstufe entspannt werden.

25. Verfahren nach einem der Ansprüche 21 bis 24, **dadurch gekennzeichnet, dass** das erste Rohrleitungssystem zur Einspeisung von thermischer Energie in die innere Zone und dass das zweite Rohrleitungssystem zur Entnahme von thermischer Energie aus der inneren Zone zum Verdampfen des Arbeitsfluids eingesetzt werden.

26. Verwendung des Mehrkammerwärmespeichers gemäß einem der Ansprüche 1 bis 20 für die Bereitstellung thermischer Energie zur Erzeugung von elektrischer Energie.

## Claims

1. A multi-chamber thermal reservoir (1) for storing thermal energy and producing electrical energy, comprising
a pit structure (2) which is, in particular, formed in the ground and comprises a bottom (6), a side wall (14) which is, in particular, continuous, and a cover (20), **characterized in that** the pit structure (2) comprises at least one inner zone (5) with a first solid pit filling (12) and at least one outer zone (3) with a second solid pit filling (15) and the outer zone (3) surrounds the inner zone (5) at least partially, that the pit filling (12) of the inner zone (5) is separated, at least in sections, from the pit filling (15) of the outer zone (3) by at least one separating wall (7), that the material of the first solid pit filling (12) has, on average, a smaller grain size than that of the second solid pit filling (15) or has, at least in sections, a compact structure, and that the inner zone (5) comprises at least one first pipe system (90) with at least one inlet (42) into the inner zone (5) and at least one outlet (34) from the inner zone (5) for passing fluids therethrough and which is provided, at least in sections, within the material of the first pit filling (12) of the inner zone (5).

2. A multi-chamber thermal reservoir (1) according to claim 1, **characterized in that** the outer zone (3) essentially comprises an incompressible granular and/or grit-like material which has, in particular, a grain size of 8/11 mm, 11/16 mm, and/or 11/22 mm as the second solid pit filling (15).

3. A multi-chamber thermal reservoir (1) according to claim 1 or 2, **characterized in that** the material of the first solid pit filling (12) comprises sand.

4. A multi-chamber thermal reservoir (1) according to any one of the preceding claims, **characterized in that**
the first solid pit filling (12) comprises an incompressible granular and/or grit-like material which has a grain size of 0/2 mm, 2/5 mm, and/or 5/8 mm.

5. A multi-chamber thermal reservoir (1) according to any one of the preceding claims, **characterized in that**
the separating wall (7) which separates the inner zone (5) and outer zone (3) from each other is fluid-proof, so that virtually no liquid fluids can be exchanged between the inner and outer zones.

6. A multi-chamber thermal reservoir (1) according to any one of the preceding claims, **characterized in that**
the inner zone (5) comprises at least one second pipe system (100) with at least one inlet into the inner zone (5) and at least one outlet from the inner zone (5) for passing fluids therethrough, which system is provided, at least in sections, within the material of the first pit filling (12) of the inner zone (5).

7. A multi-chamber thermal reservoir (1) according to any one of the preceding claims, further **characterized by**
at least one unit (200) for conducting the Kalina process, a first unit for conducting a closed-cycle gas turbine process and by means of which inert gases, in particular nitrogen, carbon dioxide, and/or noble gases, can be expanded, and/or a unit for conducting the ORC process, each of which comprises at least one evaporator (202), at least one gas turbine (206), at least one condenser (208), at least one compressor (212), and at least one cooling system (210) which are coupled to the outlet of the first and/or second pipe system (90, 100) in each case, in particular via at least one supply pipe (214).

8. A multi-chamber thermal reservoir (1) according to claim 7, **characterized by** at least one discharge pipe (216) which continues from the supply pipe (214) downstream of the evaporator.

9. A multi-chamber thermal reservoir (1) according to claim 7 or 8, **characterized by** at least one second unit for conducting a closed-cycle gas turbine process and by means of which inert gases, in particular nitrogen, carbon dioxide, and/or noble gases, can be compressed, heated in a gas heater, and expanded in a gas turbine stage, wherein at least a section of the discharge pipe (216) and/or of the cooling system (210) constitute the gas heater of said second unit.

10. A multi-chamber thermal reservoir (1) according to any one of the preceding claims, **characterized in that**
the second pit filling (15) of the outer zone (3) is divided into partial zones (28) by at least two separating walls and/or at least one continuous separating wall.

11. A multi-chamber thermal reservoir (1) according to any one of claims 8 to 10, **characterized in that**
the discharge pipe (216) is connected to at least one inlet pipe (40) of the outer zone (3) or at least one partial zone (28) of the outer zone (3).

12. A multi-chamber thermal reservoir (1) according to any one of the preceding claims, **characterized in that**
the bottom (6) comprises at least one thermal insulation layer (8) and at least one sealing layer (10) which is, in particular, arranged above the insulation layer, in particular an essentially waterproof, flexible plastic sealing film, and that the side wall (14) comprises at least one thermal insulation layer (16) and/or at least one sealing layer (18) which is, in particular, arranged on the inside, and/or that the cover (20) of the pit structure (2) comprises at least one thermal insulation layer (22) and at least one sealing layer (24) which is provided above the insulation layer.

13. A multi-chamber thermal reservoir (1) according to claim 12, **characterized in that**
the thermal insulation layer (16, 22) of the side wall (14) and/or of the cover (20) comprises at least one layer of foam bodies which are, in particular, adjacent to each other, in particular large-sized and/or closed-pore rigid foam blocks.

14. A multi-chamber thermal reservoir (1) according to any one of the preceding claims, **characterized in that**
the thermal insulation layer (8) of the bottom (6) comprises at least one layer of foam bodies which are, in particular, adjacent to each other, in particular large-sized and/or closed-pore rigid foam blocks, and/or at least one layer of mineral insulation materials, in particular foam glass, expanded clay, and/or expanded shale.

15. A multi-chamber thermal reservoir (1) according to any one of the preceding claims, **characterized in that**
the separating wall (26) for dividing the outer zone (3) comprises at least one wall of stone, concrete, metal, and/or plastic, in particular a pressure-resistant plastic material and/or a plastic film, and that the separating wall (7) between the inner zone (5) and the outer zone (3) comprises at least one wall of stone, concrete, and/or metal.

16. A multi-chamber thermal reservoir (1) according to any one of the preceding claims, **characterized by**
at least one fluid inlet pipe (40), in particular adjacent to the lower side of the inner sealing layer of the cover, for the discharge of fluid into the outer zone (3) or into a partial zone (28) of the outer zone (3), and/or at least one fluid outlet pipe (50), in particular on, in or adjacent to the bottom (6), for the removal of fluid from the outer zone (3).

17. A multi-chamber thermal reservoir (1) according to any one of the preceding claims, **characterized in that**
each partial zone (28) of the outer zone (3) is provided with at least one outlet pipe (50) and/or with at least one inlet pipe (40).

18. A multi-chamber thermal reservoir (1) according to any one of the preceding claims, **characterized in that**
the outer zone (3) is provided, at least in sections, on the side, is provided, at least in sections in each case, on the side and below, is provided, at least in sections in each case, on the side and above, or is provided, at least in sections in each case, on the side, below and above the inner zone (5), in particular surrounds the inner zone on all sides.

19. A multi-chamber thermal reservoir (1) according to any one of the preceding claims, **characterized by**
an essentially liquid-proof trough construction and/or through-shaped membrane which surrounds the pit structure in order to prevent groundwater from entering said structure, wherein the trough structure and/or the packing which is provided between the bottom and/or side wall of the pit structure and the inner wall of the trough structure and/or the through-shaped membrane comprises ballast material, in particular coarse-grained electric furnace slag.

20. A multi-chamber thermal reservoir (1) according to any one of the preceding claims, **characterized by**
at least one operating and/or control unit containing at least one circulation pump, a heat exchanger, and/or an inflow and outflow control, in particular a valve control and/or spray pipe control.

21. A method for producing electrical energy, comprising the steps of
a) providing a multi-chamber thermal reservoir according to any one of the preceding claims,
b) feeding energy into the inner zone via the first pipe system by passing heated fluid therethrough, so that the temperature of the inner zone is, on average, at least 110°C,
c) using the thermal energy which has been fed into and stored in the inner zone to evaporate a working fluid, in particular a mixture comprising ammonia and water, or to evaporate liquid, highly volatile organic compounds, or to evaporate liquefied gases, in particular liquefied inert gases,
d) driving at least one steam turbine by means of the steam forming from the expanding working fluid during the evaporation process, and
e) converting the kinetic energy of the moving steam turbine into electrical energy.

22. A method according to claim 21, **characterized in that**
the steps c), d), and/or e) are a part of the Kalina process or the ORC process.

23. A method according to claim 21 or 22, **characterized in that**
the heated fluid which is used to evaporate the working fluid is fed via at least one discharge pipe into the outer zone, in particular a partial zone whose temperature is below that of the fluid to be fed, once it has left the evaporator.

24. A method according to any one of claims 21 to 23, **characterized in that**
the cooling system or the discharge pipe is used to operate a closed-cycle gas turbine process in which compressed, liquefied inert gases, in particular nitrogen, carbon dioxide, and/or noble gases, are heated in the liquefied and/or evaporated state and subsequently expanded in a gas turbine stage via the cooling system and/or the discharge pipe.

25. A method according to any one of claims 21 to 24, **characterized in that**
the first pipe system is used for feeding thermal energy into the inner zone, and that the second pipe system is used for removing thermal energy from the inner zone to evaporate the working fluid.

26. The use of the multi-chamber thermal reservoir according to any one of claims 1 to 20 for the provision of thermal energy to produce electrical energy.

## Revendications

1. Accumulateur thermique (1) à chambres multiples destiné à l'accumulation d'énergie thermique ainsi qu'à la génération d'énergie électrique, comprenant
une structure formant fosse (2), en particulier encastrée dans le sol, comprenant une sole (6), une paroi latérale (14), en particulier périphérique, et une couverture (20), **caractérisé en ce que** la structure formant fosse (2) comprend au moins une zone intérieure (5) avec un premier remplissage de fosse (12) en matières solides et au moins une zone extérieure (3) avec un second remplissage de fosse (15) en matières solides, et la zone extérieure (3) entoure au moins partiellement la zone intérieure (5), le remplissage de fosse (12) de la zone intérieure (5) est séparé du remplissage de fosse (15) de la zone extérieure (3) au moins localement par au moins une paroi de séparation (7), le matériau du premier remplissage de fosse en matières solides (12) dispose en moyenne d'une composition granulométrique plus faible que celle du second remplissage de fosse (15) en matières solides ou présente au moins localement une structure compacte, et la zone intérieure (5) comprend au moins un premier système de conduite (90), avec au moins une admission (42) dans la zone intérieure (5) et au moins une sortie (34) hors de la zone intérieure (5) afin de canaliser des fluides, qui est présent au moins par endroits dans le matériau du premier remplissage de fosse (12) de la zone intérieure (5).

2. Accumulateur thermique (1) à chambres multiples selon la revendication 1, **caractérisé en ce que** la zone extérieure (3) comprend un matériau granulaire et/ou de type gravillon, essentiellement incompressible, en tant que second remplissage de fosse (15) en matières solides, en particulier ayant une composition granulométrique de 8/11 mm, 11/16 mm et/ou 11/22 mm.

3. Accumulateur thermique (1) à chambres multiples selon la revendication 1 ou 2, **caractérisé en ce que** le matériau du premier remplissage de fosse (2) en matières solides comprend du sable.

4. Accumulateur thermique (1) à chambres multiples selon l'une quelconque des revendications précédentes, **caractérisé en ce que**
le premier remplissage de fosses en matières solides (12) comprend un matériau granulaire et/ou de type gravillon, incompressible, ayant une composition granulométrique de 0/2 mm, 2/5 mm et/ou 5/8 mm.

5. Accumulateur thermique (1) à chambres multiples selon l'une quelconque des revendications précédentes, **caractérisé en ce que**
la paroi de séparation (7) séparant l'une de l'autre la zone intérieure (5) et la zone extérieure (3) est étanche aux fluides, de sorte que des fluides essentiellement liquides ne peuvent être échangés entre la zone intérieure et la zone extérieure.

6. Accumulateur thermique (1) à chambres multiples selon l'une quelconque des revendications précédentes, **caractérisé en ce que**
la zone intérieure (5) comprend au moins un second système de conduite (100), avec au moins une admission dans la zone intérieure (5) et au moins une sortie hors de la zone intérieure (5) afin de canaliser des fluides, qui est présent au moins par endroits dans le matériau du premier remplissage de fosse (12) de la zone intérieure (5).

7. Accumulateur thermique (1) à chambres multiples selon l'une quelconque des revendications précédentes, **caractérisé en outre par**
au moins une installation (200) pour la mise en oeuvre du procédé Kalina, une première installation pour la mise en oeuvre d'un procédé de turbine à gaz en circuit fermé, avec laquelle des gaz inertes, en particulier de l'azote, du dioxyde de carbone et/ou des gaz rares, peuvent être détendus, et/ou une installation pour la mise en oeuvre du procédé ORC, comprenant respectivement au moins un évaporateur (202), au moins une turbine à gaz (206), au moins un condenseur (208), au moins un compresseur (212) et au moins un système de refroidissement (210), respectivement couplé, en particulier par l'intermédiaire d'au moins une conduite d'acheminement (214), au niveau de la sortie du premier et/ou du second système(s) de conduite (90, 100).

8. Accumulateur thermique (1) à chambres multiples selon la revendication 7, **caractérisé par**
au moins une conduite de drainage (216), dans laquelle passe la conduite d'acheminement (214) en amont de l'évaporateur.

9. Accumulateur thermique (1) à chambres multiples selon la revendication 7 ou 8, **caractérisé par**
au moins une seconde installation destinée à la mise en oeuvre d'un procédé de turbine à gaz en circuit fermé, avec laquelle des gaz inertes, en particulier de l'azote, du dioxyde de carbone et/ou des gaz rares, peuvent être comprimés, chauffés dans un réchauffeur de gaz et détendus dans un étage de turbine à gaz, au moins une section de la conduite de drainage (216) et/ou du système de refroidissement (210) représentant le réchauffeur de gaz de cette seconde installation.

10. Accumulateur thermique (1) à chambres multiples selon l'une quelconque des revendications précédentes, **caractérisé en ce que**
le second remplissage de fosse (15) de la zone extérieure (3) est divisé en sous-zones (28) par au moins deux parois de séparation (26) et/ou au moins une paroi de séparation périphérique.

11. Accumulateur thermique (1) à chambres multiples selon l'une quelconque des revendications 8 à 10, **caractérisé en ce que**
la conduite de drainage (216) est raccordée à au moins un tube d'admission (40) de la zone extérieure (3) ou d'au moins une sous-zone (28) de la zone extérieure (3).

12. Accumulateur thermique (1) à chambres multiples selon l'une quelconque des revendications précédentes, **caractérisé en ce que**
la sole (6) comprend au moins une couche d'isolation thermique (8) et au moins une couche d'étanchéité (10), en particulier mise en place au-dessus de la couche d'isolation, en particulier une feuille d'étanchéité en matière plastique flexible, essentiellement étanche à l'eau, et la paroi latérale (14) comprend au moins une couche d'isolation thermique (16) et/ou au moins une couche d'étanchéité (18), en particulier située à l'intérieur, et/ou la couverture (20) de la structure formant fosse (2) comprend au moins une couche d'isolation thermique (22) et au moins une couche d'étanchéité (24) présente au-dessus de la couche d'isolation.

13. Accumulateur thermique (1) à chambres multiples selon la revendication 12, **caractérisé en ce que**
la couche d'isolation thermique (16, 22) de la paroi latérale (14) et/ou de la couverture (20) comprend au moins une strate constituée de corps en mousse, en particulier adjacents, en particulier de blocs en mousse dure de grand format et/ou à cellules fermées.

14. Accumulateur thermique (1) à chambres multiples selon l'une quelconque des revendications précédentes, **caractérisé en ce que**
la couche d'isolation thermique (8) de la sole (6) comprend au moins une strate constituée de corps en mousse, en particulier adjacents, en particulier de blocs de mousse dure de grand format et/ou à cellules fermées, et/ou au moins une couche constituée de substances isolantes minérales, en particulier de la mousse de verre, de l'argile expansée et/ou du schiste expansé.

15. Accumulateur thermique (1) à chambres multiples selon l'une quelconque des revendications précédentes, **caractérisé en ce que**
la paroi de séparation (26) destinée à diviser la zone extérieure (3) comprend au moins une paroi constituée de pierre, béton, métal et/ou matière plastique, en particulier une matière plastique résistante à la compression et/ou une feuille de matière plastique, et la paroi de séparation (7) entre la zone intérieure (5) et la zone extérieure (3) comprend au moins une paroi constituée de pierre, de béton et/ou de métal.

16. Accumulateur thermique (1) à chambres multiples selon l'une quelconque des revendications précédentes, **caractérisé par**
au moins un tube d'admission de fluide (40), en particulier adjacent à la face inférieure de la couche d'étanchéité intérieure de la couverture, destiné au drainage du fluide dans la zone extérieure (3) ou dans une sous-zone (28) de la zone extérieure (3) et/ou au moins un tube de sortie de fluide (50), en particulier sur, dans ou au voisinage de la sole (6), destiné au prélèvement d'un fluide hors de la zone extérieure (3).

17. Accumulateur thermique (1) à chambres multiples selon l'une quelconque des revendications précédentes, **caractérisé en ce que**
chaque sous-zone (28) de la zone extérieure (3) dispose d'au moins un tube de sortie (50) et/ou d'au moins un tube d'admission (40).

18. Accumulateur thermique (1) à chambres multiples selon l'une quelconque des revendications précédentes, **caractérisé en ce que**
la zone extérieure (3) est présente au moins localement sur les côtés, respectivement au moins localement sur les côtés et en dessous, respectivement au moins localement sur les côtés et au-dessus ou respectivement au moins localement sur les côtés, en dessous et au-dessus de la zone intérieure (5), et en particulier entoure cette zone intérieure de tous côtés.

19. Accumulateur thermique (1) à chambres multiples selon l'une quelconque des revendications précédentes, **caractérisé par**
une construction formant bassin et/ou un bassin à membrane essentiellement étanche au liquide, qui entoure la structure formant fosse, pour maintenir l'eau souterraine à distance de celle-ci, où la construction formant bassin et/ou le remblais présent entre la sole et/ou la paroi latérale de la structure formant fosse et la paroi intérieure de la construction formant bassin et/ou du bassin à membrane comprend un matériau de ballast, en particulier du laitier de four électrique à gros grains.

20. Accumulateur thermique (1) à chambres multiples selon l'une quelconque des revendications précédentes, **caractérisé par**
au moins une unité d'exploitation et/ou de commande, contenant au moins une pompe de circulation, un échangeur de chaleur et/ou une commande d'arrivée et d'écoulement, en particulier une commande de vanne et/ou de tube de pulvérisation.

21. Procédé destiné la génération de l'énergie électrique, comprenant les étapes suivantes consistant à :
a) mettre à disposition un accumulateur thermique à chambres multiples selon l'une quelconque des revendications précédentes,
b) injecter de l'énergie dans la zone intérieure par l'intermédiaire du premier système de conduite en y faisant parvenir du fluide réchauffé, de sorte que la température de la zone intérieure soit en moyenne d'au moins 110°C.
c) utiliser l'énergie thermique injectée et stockée dans la zone intérieure pour évaporer un fluide de procédé, en particulier un mélange comprenant de l'ammoniaque et de l'eau, ou pour évaporer des composés organiques volatils liquides ou pour évaporer des gaz liquéfiés, en particulier des gaz inertes liquéfiés,
d) entraîner au moins une turbine à vapeur grâce à la vapeur produite par la détente du fluide de procédé lors du phénomène d'évaporation, et
e) transformer l'énergie cinétique de la turbine à vapeur en mouvement en énergie électrique.

22. Procédé selon la revendication 21, **caractérisé en ce que** les étapes c), d) et/ou e) font partie du procédé Kalina ou du procédé ORC.

23. Procédé selon la revendication 21 ou 22, **caractérisé en ce que**
le fluide réchauffé utilisé pour l'évaporation du fluide de procédé est injecté dans la zone extérieure, en particulier une sous-zone ayant une température inférieure à celle du fluide à injecter, après avoir quitté l'évaporateur, par l'intermédiaire d'au moins une conduite de drainage.

24. Procédé selon l'une quelconque des revendications 21 à 23, **caractérisé en ce que**
le système de refroidissement et/ou la conduite de drainage est utilisé(e) pour exploiter un procédé de turbine à gaz en circuit fermé, dans lequel des gaz inertes compressés, liquéfiés, en particulier de l'azote, du dioxyde de carbone et/ou des gaz rares, sont réchauffés, à l'état liquéfié et/ou évaporé, par l'intermédiaire du système de refroidissement et/ou de la conduite de drainage et sont ensuite détendus dans un étage de turbine à gaz.

25. Procédé selon l'une quelconque des revendications 21 à 24, **caractérisé en ce que**
le premier système de conduite est utilisé pour l'injection d'énergie thermique dans la zone intérieure et le second système de conduite est utilisé pour le prélèvement de l'énergie thermique à partir de la zone intérieure en vue de l'évaporation du fluide de procédé.

26. Utilisation de l'accumulateur thermique à chambres multiples selon l'une quelconque des revendications 1 à 20 pour la fourniture d'énergie thermique destinée à la génération d'énergie électrique.
